# EUROPEAN PATENT SPECIFICATION

(11) **EP 0 904 639 B1**
(45) Date of publication and mention of the grant of the patent: **16.05.2001**
(21) Application number: 97924841.6
(22) Date of filing: 13.06.1997
(51) Int. Cl.: H04B 7/26, H04L 1/00, H04L 1/12

(54) **WIDE-AREA WIRELESS DISTRIBUTION SYSTEM**
WEITRÄUMIGES SCHNURLOSES VERTEILUNGSSYSTEM
SYSTEME DE DISTRIBUTION SANS FIL LARGE ZONE

(30) Priority: 13.06.1996 US 19459 P
(43) Date of publication of application: 31.03.1999
(73) Proprietor: Nortel Networks Limited, Montreal, Quebec H2Y 3Y4 (CA)
(72) Inventor: GRAVES, H., David, Winnipeg, Manitoba R3R 2S7 (CA); BUGAS, Dmitry, Winnipeg, Manitoba R3P 0J6 (CA); SCHELLENBERG, James, Winnipeg, Manitoba R2M 2B7 (CA)
(74) Representative: Bewley, Ewan Stuart
(86) International application number: CA9700417
(87) International publication number: WO9748191

(56) References cited:
- EP-A- 0 507 384
- EP-A- 0 651 531
- WO-A-92/22162
- WO-A-94/08414
- WO-A-95/25409
- CA-A- 2 092 608
- DE-A- 4 141 398
- GB-A- 2 299 491
- PATENT ABSTRACTS OF JAPAN vol. 6, no. 264 (E-150), 23 December 1982 & JP 57 159148 A (FUJITSU), 1 October 1982,

## Description

### Field of the Invention

The invention relates to a point to multipoint wireless communication system for applications involving voice, video, audio, television and data. The system may be multi-function, multicell, unidirectional, bi-directional and/or multi-directional. The wireless frequencies to which this system design is applicable range from 54 MHz to 140 GHz, which therefore incorporates the UHF/VHF TV broadcast band as well as the MMDS, LMDS, MVDS and other bands being defined at the time of this patent.

As of June 13, 1996, there are no deployed MPEG2 digital TV systems at MMDS or higher frequencies, and there are also no high-frequency (20 GHz to 45 Ghz or above) point to multipoint systems operating in the world. Also, there are no point to multipoint Wireless ATM systems operating in the world. Also, there are no known MPEG2 switching and multiplexing systems operating in the world. For this reason, the systems designs that are being discussed within this patent are unique and novel.

### Background

Currently, multi-cellular digital telephone systems are being utilized within many of the world's countries, with design elements and principles such as digital modulation techniques, common control channels, dynamic power adjustment and dynamic channel assignment on a per phone-call basis being used. These systems typically service portable or mobile users, and are designed for the constraints of the mobile portable environment. Specifically, these constraints are the use of omni-directional antennas at the mobile/portable site, omni-directional or sectorized antennas at the cell-site, equivalent Rx/Tx patterns at the mobile/portable site, and significant multi-pathing and delay spreads due to a combination of factors including cell-site and mobile/portable site antenna heights, the movement of the mobile/portable site, and minimum antenna directionality at the mobile/portable site.

Telecommunications and Cable TV trunking links operating at 13 and 18 GHz have been implemented for some time with pilot tones being inserted into their frequency allocation. These pilot tones are used both for feedback into the Automatic Gain Control (AGC) circuits of the receiver as well as for the provision of a reference frequency at the receiver which allows a low-cost, highly stable receive Local Oscillator (LO) circuit that is locked to the transmission system oscillator. This feature allows the higher-cost highly stable LO to be located at the transmit site, which reduces network costs and allows for easier access for service personnel.

Analog MMDS systems are currently in use throughout the world, utilizing the 2.50 to 2.686 GHz frequency band. These systems utilize the system design concepts of on-frequency repeating/boosting, cross-polarization, and frequency offset techniques to provide for multicell distribution within a given coverage area.

As of Feb. 1996, Digital MMDS systems are being proposed and supplied within the 2.5 to 2.686 GHz band of North America for the broadcast distribution of digital cable TV. As of June 1997, several Digital MMDS systems have been implemented in Canada and the USA, with the first two commercial systems being deployed by Broadband Networks Inc. in Manitoba and Saskatchewan, two Canadian provinces. These systems provide digital MPEG2 encoded TV channels into the subscriber area. These systems utilize multi-cellular design principles, in which a single subscriber can receive signals from more than one distribution tower depending on the orientation, directionality and polarization orientation of the antenna.

Multi-cellular systems are also being proposed for the 28 GHz LMDS band within the United States, the 26 to 30 GHz LMCS band within Canada, the 40.5 to 42.5 GHz MVDS band within Europe, Asia, North America and South America, the 23 and 24 GHz bands in various countries, and the 38 GHz band within various countries. One version of the design of a 28 GHz system is contained within the Canadian patent 1,333,0889 entitled "Low Power Multi-Function Cellular Television System".

These multi-cellular system designs will utilize many of the same principles that are being used within the Analog MMDS, Digital MMDS, cellular telephone and PCS system designs.

The use of directional antennas is found in certain contexts, for example US Patent No. 3,041,450, which describes the use of a directional receiver for receiving a signal from an omni-directional transmitting antenna. Other patents that discuss polarized reception or the use of horizontal vs. vertical polarization in the context of radio transmissions include U.S. Patents 2,992,427; 3,882,393; 4,220,923; 4,321,705; and 4,521,878.

The use of advanced modulation and reception techniques, such as those implemented by Broadband Networks, Broadcom, Comstream, EF Data, RF Networks, Raydyne, Stanford Telecom, Qualcomm, Fairchild, Inficom and SICOM, are employed within the context of this system design as appropriate based on the specifics of transmitter site design, receiver site design, co-channel and adjacent channel rejection characteristics and propagation channel. The system outlined within operates at various levels of subscriber and cell-site pricing, functionality and performance levels based on the use of m-ary FSK, m-ary PSK, 16/64/256 QAM, OFDM, COFDM and its variants, direct-sequence spread spectrum with orthogonal and near-orthogonal coding, frequency-hopping spread spectrum with synchronized transmissions, and other advanced modulation techniques and methods. The system described within has a frequency band plan which is organized along flexible bandwidth techniques, and any of these modulation techniques can be used within the system with any channel bandwidth from 0 to 40 MHz and above.

The implementation of very long digital wireless links has been demonstrated to the public community by SICOM (U.S.) in which a video-conferencing link was established using radio propagation between Hawaii and Phoenix, Arizona. This link did not use sky-wave reflections, but instead was enabled through the technological capability associated with OFDM modulation techniques and its variants.

Fixed channel allocation methods that have been used for cellular phone, land-mobile radio, wireless telecommunication and other systems include frequency division multiplexing (FDM), time-division multiplexing (TDM), time division duplexing (TDD) and code division multiplexing (CDM). These techniques are reviewed in the reference book "Wireless Information Networks" by K. Pahlavan and A. H. Levesque.

The possibility of using fiber-optic or coaxial links between remote transmitting, receiving or transceiving cell sites and a central cell site has been discussed by companies such as Lasertron and Anacom as well as by researchers in the scientific community, such as those associated with TR Labs of western Canada. The primary purpose of these types of connections is to reduce the amount of digital equipment at remote sites while providing increased reception and transmission diversity for the user community. These same principles may be used within the system being described in this patent document.

Multiple vendors are currently offering products that implement high-bandwidth communication or extended distance communication over existing twisted pair copper wiring. Vendors include Pairgain and TUT Systems. The technologies associated with this equipment are called ADSL (Asymmetrical Digital Subscriber Loop) and HDSL (High data rate Digital Subscriber Loop) as well as other variants. AT&T also offers a CAP (Carrierless AM/PM) transceiver chip compatible with the ATM Forum standards that provides a full 51.84 Mbps full-duplex capability through I 00 meters of Category 3 UTP (Unshielded Twisted Pair) cables. A lower data rate of 25-92 Mbps is provided for longer loops or lower grade cables. In addition, Broadcom (U.S.) indicates that current implementations are possible to provide QAM baseband signaling directly onto the UTP links, thereby providing high bandwidths with easy connectivity to the wireless networks.

Inverse multiplexing, a technique which utilizes multiple lower rate digital links to provide a single larger rate digital link, have been used within the networking community for many years. One can review standard equipment catalogues to find inverse multiplexing equipment for cabled/wired networks. As of 1997, the ATM Forum produced an Inverse Multiplexing specification in order to allow the proper transport of OC3 (155.52 Mbps) data rates via multiple lower data rate channels.

Statistical multiplexing, a technique which multiplexes multiple input data lines into a smaller aggregate line rate based on the statistical properties of each of the data sources, has been available for some time. Reference book "ATM: Theory and Application" by D. E. McDysam and D. L. Spohn briefly discuss statistical multiplexing. Statistical multiplexing is useful when the bursty sources are present (the ratio of peak rate to average rate increases above 10) and when the ratio of the peak rate of the sources relative to the link rate decreases below 0.02. For example, if residential based Internet users may supply a peak rate of 1.5 Mbps but on average insert only 0.15 Mbps, the peak rate to average rate is equal to 10. Additionally, if these users are connected to a statistical multiplexer which has an output link rate of 155 Mbps, the peak rate to link rate is equal to 1.5 / 155 = 0.01. Based on average graphs listed in the reference, this configuration of data rates allows approximately 750 users to be connected to a 155 Mbps statistical multiplexer while experiencing only I per million cell loss rate. Note that the aggregate average rate would then be 0. 1 5 Mbps ^{*} 75 0 = 11 2 Mbps.

Antenna technologies currently available include offerings from Flann Microwave in the U. K., Millitech in the U.S., Endgate in the U.S., Gardiner in the U.S., and numerous other antenna manufacturers world-wide. These manufacturers have subscriber antennas for residential and commercial usage with antenna gains ranging from 15 dBi to 42 dBi with various front-to-back ratios, sidelobe levels, beamwidths, bandwidths, and cross-polarization discrimination levels. Antenna technologies used within the system design described below can include dielectric lens, simple feed horns, planar arrays and microstrip antennas, and various designs of omni and sectorized antenna systems. All of these antenna types have potential application within the design of the system, depending on modulation type, coverage area, allowed sectorization, system operator requirements, and numerous other impinging factors.

Patented technology available from Arraycomm in the United States provides for increases in bandwidth by factors of 2 to 3 based on dynamically adjustable antenna patterns. These patterns effectively alter their main beam and sidelobe performance to receive the maximum signal from the environment while "nulling" out any interfering signals that may occur. These types of technologies are an extension of the concept of dynamic phased arrays. These antenna technologies can also be used within the system described herein. The reference ["High throughput Slotted ALOHA Packet Radio Networks with Adaptive Arrays", IEEE Trans. On Comm. Vol 41(3) March 1993, pp. 460-470] discusses a multiple beam adaptive array (MBAA) that is useful for receiving different subscriber transmissions within each of the beams. This type of antenna may also be used within the scope of this system without changing the fundamental design character of the system.

Common diversity techniques for combining of signals at the microwave level are discussed within the reference text "Digital Line-of-Sight Radio Links" by A. A. R. Townsend. These techniques provide protection against selective fading phenomena along the link. In particular, space diversity combiner technologies can be implemented at the microwave, IF or digital baseband level to enable significant improvements in performance to occur. Within this text, Table 8.5 illustrates the link availability gains that are achieved when both equalization and spatial diversity are used on radio links. Based on such results, it is expected that the point-to-multipoint links which comprise the system being discussed in this patent will experience significant improvements in performance related to selective outage due to multipath as these techniques are employed.

Common diversity techniques for the mitigation of rainfall attenuation and rainfall induced depolarization have been discussed within these texts as well. The only effective rainfall attenuation diversity method is route diversity, in which 2 or more routes are used to connect sites to one another. The principle within this method is that rainfall attenuation will only affect one of the routes and not both at the same time. In order to produce the desired effect, the two routes must be a distance apart which is greater than the rain cell size that is being combatted using this technique. Also, as the rainfall rate (mm/hour) increases it is known that the rain cell size decreases. Therefore, for very heavy rainfall rate system design, route diversity can be used over distances only several km. apart. The size of the raincell for a given mm/hour rain rate will vary from region to region. To our knowledge there has been limited analysis of the impact of route diversity within multi-cell urban networks. This is because the majority of wireless networks have been implemented for transmission frequencies below 10 GHz, in which rainfall is not a primary concern.

Equalization techniques that are in common use are reviewed in reference texts "Digital Line-of-Sight Radio Links" by A. A. R. Townsend and "Wireless Information Networks" by K. Pahlavan and A. H. Levesque.

The impact of sectorized antennas on the capacity performance of wireless systems has been briefly discussed in the reference text "Wireless Information Networks" by K. Pahlavan and A. H. Levesque, however it can be noted that the use of sectorization for simultaneous transmission of different data streams was not discussed.

The impact of the capture effect on the throughput of ALOHA networks, available only when FM modulation is being used, has been noted in the reference text "Wireless Information Networks" by K. Pahlavan and A. H. Levesque and in several journal papers. Capture effectively increases the performance of multiple-access systems using ALOHA. The capture effect extends the performance of ALOHA networks above that which is normally discussed within textbooks.

Available protocols for the implementation of control structures between multiple nodes within a medium sized area can be obtained through the purchase of IEEE 802.1 1 compliant chipsets or through the use of LON (Local Operating Network) chipsets available from Echelon (U.S.), SMC (U.S.) or other vendors. In addition, media access protocols are discussed in reference texts such as "Wireless Information Networks", K. Pahlavan and A. H. Levesque. As of June 1997, work on MAC protocols for Wireless ATM and Wireless IP networks was ongoing within groups associated with the IEEE 802.14 standard, ATM Forum Wireless ATM working group (principally concerned with PCS systems), MNCP MAC standard previously under the umbrella of the 802.14 group, IEEE 802.11 MAC, and DAVIC. The DAVIC standard targets TDMA upstream access at 1.5 Mbps nominal data rates, and uses ATM cells for the carriage of information.

Additional textbooks and journal articles discuss the implementation of media access protocols for very long links as found in satellite communication and inter-satellite communication networks. These media-access protocols discuss the relationship between propagation time, message size, link layer design and media access efficiency.

Current standards activities which have an influence on various aspects of the design include the DAVIC committee architectures and protocols for use in the interactive Television marketplace, the MPEG2 DSM-CC message structures and protocols, the HiperLan activities within the ETSI standardization efforts as related to the layer structure, protocols for the Media Access methods and subnet (distinct HiperLan) creation and registration, the DVB (Digital Video Broadcasting) standards with respect to suitable forward error control and filtering processes for wireless links, IEEE 802.11 VLAN standards with respect to office LAN protocols and media access methods, and IEEE 802.14 group for cable system based MACs. Additional research work on statistical multiplexing and its effects on the TDMA Radio Interface is located in ["Performance of a Statistically Multiplexed Access Mechanism for a TDMA Radio Interface", IEEE Personal Comm., June 1995, pp. 56-64]. Within this paper, the authors discuss design options for a third-generation TDMA and MAC access structure and the performance implications related to it. Whereas second-generation TDMA access structures used fixed-slot assignment, the third-generation TDMA methods discussed within this paper provide reallocation of slots during a call. This method does not, however, discuss flexible FDMA or flexible TDMA techniques in which the RF channel bandwidth varies while the channel is being used.

Resource allocation with radio system is discussed in many papers, including ["Performance of a Statistically Multiplexed Access Mechanism for a TDMA Radio Interface", IEEE Personal Comm., June 1995, pp. 56-64]. The resource allocation problem is present for any wireless system which has multiple carriers which are dynamically assigned to users as the users begin a connection or session. The resource allocation problem consists of assigning frequencies, channel bandwidths, and time slots to specific users based on information such as the number of available slots, the quality of the available slots, the number of users currently on the system, the type of traffic being carried on the system, the types of service requests, the priority of different services, and additional criteria. The reference ["Distributed Autonomous Wireless Channel Assignment Algorithm with Power Control", IEEE Trans. On Veh. Tech. Vol. 44(3) Aug. 1995, pg. 420-429] discusses some aspects of the resource allocation problem and a description of an algorithm for using specific parameters to provide the service routine. It does not discuss Wireless ATM systems.

Additional propagation phenomena related to power-delay profiles along urban links in particular indicate that it is possible to establish an urban Line-of-Sight (LOS) link between two directional antennas, and to allow that link to operate at data rates of 155 Mbps. Of course, 155 Mbps is a valuable rate because it then allows the transmission of SONET data rates as long as no additional error correction or framing bits are added to the stream. Information regarding these data rates was provided by TR Labs of western Canada.

Isolation between trunking and distribution antennas has been studied by the CRC (Communications Research Council) of Canada as well as by antenna companies such as Andrew Corporation. The isolation levels between trunking antennas typically achieves 100 to 130 dB of isolation, allowing dense antenna subsystems to be constructed within a small area. The isolation achieved between distribution antennas (omnidirectionals, cardioids, etc.) and trunking receive antennas located on the same tower has not been widely studied in the literature. With analog MMDS systems, the isolation required for the booster site implementations would typically allow for a C/I (Carrier to Interference) ratio of approximately 45 dB to be achieved, which indicates that an isolation of 80 dB would only allow a booster site gain of 35 dB to be used. As noted within the system design below, digital systems allow higher levels of C/I to be tolerated (such as 25 dB for 16-QAM, 31 dB for 64-QAM and 20 dB for QPSK modulation) which therefore allows for higher levels of repeater (booster) gain at a repeater (booster) site. (In analog systems, the term booster is used. In digital systems, the term repeater is used. The functions of both of these types of sites is equivalent, in that a receive antenna receives a signal from a more distant site, provides the signal to a repeater power amplifier which acts as a gain device, with the output of the repeater being connected to a distribution antenna.) This type of site is used in analog MMDS systems to provide coverage into shadowed areas. For digital systems, this type of site is used to trunk signals from one location to another. When the two types of functions are integrated together, a site exists in digital MMDS, LMCS, LMDS and MVDS systems in which both distribution and trunking is accommodated on the same tower.

Single Frequency Networks (SFNs) have been discussed in various references and papers ["On the Outage Probability in Signal Frequency Networks for Digital Broadcasting", IEEE Trans. On Broadcasting, Vol. 39, No. 4, Dec. 1993, pg. 395]. SFNs are simulcasting networks in which the same data stream is transmitted from multiple transmit sites within an area, equivalent to a simulcasting multi-cell system. (Note that this is different than the system discussed below, in which different information streams are transmitted from each cell site location). This paper indicates that for wide area networks, very low outage probabilities may be achieved with very modest transmitter powers, supporting therefore a low-power approach to multi-cell systems. The SFN discussed within this paper uses COFDM (Coded Orthogonal Frequency Division Multiplexing) methods to deal with the interference issues that arise at the subscriber mobile terminal. Notice, however, that the mobile terminal must use an omnidirectional antenna which much move within the environment. The system design proposed below achieves the same efficiency in frequency spectrum and frequency usage for a fixed broadband system through the use of directional, fixed location antennas at the subscriber premise.

The usefullness and utility of low-power multicell design is further enhanced in the paper quoted above when one accounts for the dual effects of interference and thermal noise. In the case where transmitter powers are very low, the system performance and link performance is limited by thermal noise. In the case where the transmitter powers are too high, the system and link performance is limited by system generated interference. Only when a proper balance of transmit power is used, which is a low-power approach, can the interference and thermal noise be balanced and the link performance optimized. Analysis of the RF system performance of SFNs is important for the system design discussed below, because for a dense frequency re-use value of 1 the multicell system becomes much like a SFN except with differing information transmitted from the various cell sites.

At subscriber sites, the majority of wireless systems today utilize a single antenna at the customer premise with suitable diplexers offering simultaneous transmit and receive functionality. The system described below, however, can utilize two antennas at the subscriber premise in order to increase the isolation which is achieved between the transmit and receive directions. This use of two antennas is possible for high frequency networks because of the small size of the two antennas. This approach therefore provides increased isolation which allows more dense frequency reuse values approaching a value of 1 to be used. Note that unlike wireless systems designed for the mobile environment, the wireless system designed for the fixed site environment uses directional antennas at the subscriber premise, an optimal placement of the subscriber antennas on / above or below the roof-line of the commercial or residential building. These advantages mean that the fixed site wireless network links will experience drastically reduced problems due to multipathing and interference. As well, unlike the mobile environment, fixed site systems use subscriber antenna locations that are typically at a height of 20 feet or more above the ground level. Therefore, multipathing occurrences and the severity of multipathing is reduced. Because multipathing is reduced the use of cross-polarization at cell site locations becomes easier, thereby allowing the combination of cross-polarization between adjacent sectors at a cell site and a dense frequency reuse plan throughout the system to become possible.

As of Feb. 1996, Wireless ATM point-to-multipoint system design and implementation of the purpose of fixed broadband wireless access is in the very preliminary stages of being defined. No existing deployed systems exist. (Broadband Networks Inc. of Winnipeg Canada has been the first company to provide a Wireless ATM broadband demonstration, which occurred at the ComNet show in Washington, D.C. as of spring 1997). Several papers on the subject have appeared. "An ATM based protocol for Wireless LANs", J. Porter and A. Hopper (Ollivetti Research Ltd, Cambridge, England) discusses the design issues for Wireless ATM used in mobile applications. They discuss the frequency reuse issues for indoor environments, hand-off, registration and identification, and acknowledgment-based data link layers. They use spread-spectrum modulation is used within their system. The reference ["ATM-based Transport Architecture for Multiservices Wireless Personnel Communication Networks" IEEE Journal on Sel. Areas in Comm. Vol. 12 (8) Oct. 1992 pp. 1401-1414] discusses viewpoints on the use of ATM within PCN networks.

It is apparent, therefore, that new design methodologies and solutions are required to provide Wireless ATM, including the methodology related to Q.2931 wireless signalling, VPI/VCI addressing schemes, wireless Channel Access Control (CAC) functions, control channel methodologies for system access, and effective data transport through statistical multiplexing and burst request methodologies at the MAC layer for ATM transport. In addition, the specific methodologies used for the transport of CBR (Constant Bit Rate) , VBR (Variable Bit Rate), ABR (Available Bit Rate) and UBR (Unassigned Bit Rate) are part of the design of a Wireless ATM system. In addition, the mixture of CBR, VBR, ABR and UBR traffic types on a single upstream link from subscriber to cell site are also of interest, as it affects the dynamic bandwidth methodologies discussed below. Within Wireless ATM systems, it is also important to limit the usage and transmission of idle cells within the system. For wired ATM networks, the interfaces typically operate at a fixed data rate regardless of the information which is being transmitted. As discussed below, however, specific methodologies can be used to eliminate idle cells at the entry point to the wireless link, thereby providing maximum efficiency for the wireless spectrum usage.

Wireless IP (Internet Protocol) systems, in which IP is used a transport medium instead of ATM, are also new. No existing IP-based systems are known to the inventors within the fixed broadband networks marketplace. For these systems, the trends of IPv6 with its related addressing and QoS (Quality of Service) methods are of interest, as these trends have to be mapped into the Wireless IP system design. The reference ["An Architecture for a Campus-Scale Wireless Mobile Internet" Purdue Tech. report CSD-TR-95-058] discusses IP based wireless systems in the mobile environment.

While certain elements of the present invention may be found in other contexts, insofar as can be determined none of the relevant literature suggests a low power, multiple carrier, multi cellular, unidirectional, bi-directional, and multi-directional communication system for applications across a broad scale, including voice, video, audio, television and data delivery, that has the spectral efficiency, spatial efficiency and application flexibility of the invention set forth in this disclosure. The invention encompasses as well the design of Wireless ATM and Wireless IP broadband networks for fixed and portable site applications.

WO 94/08414 to COM 21 INC. provides a cell based wide area network alternative access telephone and data system which employs high data rate cells and a directory computer for establishing virtual connections between a plurality of terminal devices to support a multiplicity of simultaneous terminal device applications for homes and businesses.

WO 95/25409 to ENDLINK INC. provides a sectorized multi-function cellular radio communication system which teaches of a communications apparatus which includes a first transmitting antenna array having a transmitting antenna which is dedicated to serve only a first sector. Similarly, a second transmitting antenna array having a transmitting antenna is dedicated to serve only a second sector.

According to a first aspect of the invention there is provided a wireless distribution system for communicating over a coverage area, said system comprising:
a plurality of cells within the coverage area;
at least one cell site including signal transmitting means within each cell;
at least one subscriber site within each cell, including signal receiving means for receiving signals from the cell within the same cell;
each subscriber site includes a modem for demodulating the signals received from the cell site;
wherein the cell site includes bandwidth signal means for transmitting bandwidth control signals to the subscriber site; and
the modem includes bandwidth selecting means responsive to the bandwidth control signals for selectively varying an operating bandwidth of the modem.

Preferably, in such a system including a plurality of subscriber sites within at least one cell, the signal transmitting means in said at least once cell comprises means for broadcasting within the at least one cell a microwave signal having a selected bandwidth, and the modems comprise means responsive to respective bandwidth control signals operate on respective portions of said selected bandwidth.

A plurality of subscriber sites within at least one cell can comprise transmitter means for transmitting signals to the cell site and receiver means for receiving signals from the cell site, the transmitter means and receiver means operating at different transmit and receive frequencies, and the modems comprise means responsive to the bandwidth control signals to provide a guard band between the transmit and receive frequencies.

The cell site can include modulation signal means for transmitting modulation control signals to the subscriber site; and the modem includes modulation method selecting manes responsive to the modulation control signals for selectively varying the modulation method of the modem.

Monitoring means for monitoring system performance may be provided with control means for controllably varying the bandwidth control signals according to system performance and/or controllably varying modulation control signals according to system performance and/or for controllably varying the forward error correction control signals according to system performance.

Plural cell sites including trunking means for wireless communication amongst the cell sites with trunking signals on a selected frequency and at a selected polarization may be provided, the signal transmitting means comprising means for transmitting distribution signals within the respective cells on said selected frequency and cross polarized with respect to the trunking signals.

The cell site can include means for communicating with an internet service provider;
at least one subscriber site includes a plurality of computers, a network linking the computers for communication with one another, a modem connected to the network, transmitter means for transmitting signals from the modem to the cell site and receiver means for receiving signals from the cell site;
each modem has a unique serial number assigned thereto;
each computer within the subscriber site has a class A IP address;
each modem comprises:
   means for converting a message received from a computer over the associated network to a wireless message format containing the serial number of the modem; and
   means for converting a message received in a wireless message format from the cell site to a network message format;
   the cell site comprises means for converting a message received from a modem to an IP message format, replacing the class A IP address with an IP address; and
   means for converting a message received from the internet service provider to a wireless message format containing a modem serial number and a class A IP address.

In accordance with another aspect of the invention there is provided a method of operating a wireless distribution system communicating over a coverage area including a plurality of cells, said method comprising:
providing at least one cell site including signal transmitting means within each cell;
transmitting signals from the cell sites throughout the respective cells;
providing within each cell at least one subscriber site including signal receiving means;
receiving signals at each subscriber site from the cell site within the same cell;
providing each subscriber site with a modem;
demodulating the signals received from the cell site with the modem;
transmitting bandwidth control signals from each cell site; and varying the operating bandwidth of the modem according to the bandwidth control signals.

The method preferably, in a system which includes a plurality of subscriber sites within at least one cell, includes broadcasting within the at least one cell a microwave signal having a selected bandwidth, and controlling the modems to operate on respective portions of said selected bandwidth.

The method can further comprise:
transmitting signals from at least one subscriber site to the respective cell site at a first frequency;
receiving signals at said at least one subscriber site from the respective cell site at a second frequency; and
controlling the operation of the modems to provide a guard band between the first and second frequencies.

The method can include the steps of:
transmitting modulation control signals to the subscriber site; and selectively varying the modulation method of the modem according to the modulation control signals.

The method can include the steps of: monitoring system performance and controllably varying the bandwidth control signals according the system performance.

The method can include the steps of: monitoring system performance and controllably varying the modulation control signals according to system performance.

The method can include the steps of: monitoring system performance and controllably varying the forward error correction control signals according to system performance.

In accordance with a further aspect of the invention the method can further comprise the following steps:
providing the cell site with means for communicating with an internet service provider;
providing at least one subscriber site with a plurality of computers, a network linking the computers for communication with one another, a modem connected to the network transmitter means for transmitting signals from the modem to the cell site and receiver means for receiving signals from the cell site;
assigning a unique serial number to each modem;
providing a class A IP address for each computer within the subscriber site;
converting a message received from a computer over the associated network to a wireless message by the modem in a wireless message format from the cell site to a network message format;
converting a message received by the cell site from a modem to an IP message format, replacing the class A IP address with an IP address; and
converting a message received by the cell site from the internet service provider to a wireless message format containing a modem serial number and a class A IP address.

Unlike conventional wireless systems, this aspect of the present system provides modem, modulator and demodulator elements that operate over the complete licensed band of the operator. These elements preferably offer software selectable channel bandwidths, modulation capability, and forward-error correction capability. In addition, the microwave transmitter, receiver and transceiver elements also operate over the full licensed band of the operator, thereby achieving a broadband microwave infrastructure coupled with a flexible modem (modulator, demodulator) architecture that allows flexible channelization at the systems level. These system element attributes allow for the licensed bandwidth to be used in whichever direction (downstream or upstream) at whatever time the system operator deems reasonable. Therefore, there is no need to specify in advance which channels are used in which direction, as with existing wireless system architectures. There may be fixed control channels within the design, however, that always remain in a constant direction, either downstream or upstream.

The system may implement ATM transport capabilities to and from the subscriber, IP transport to and from the subscriber and MPEG2 transport to and from the subscriber. The system may thus be used for an integrated array of services, including broadcast capabilities to the home provided over ATM or other backbone networks, interactive Television, Video on Demand, Media on Demand, Near Video on Demand, high bandwidth internet access, videoconferencing, and other applications. The system is applicable to all frequencies between 200 MHz and 140 GHz, with various available RF allocations requiring changes in the antennas, transmitters, and other RF elements. The system may also operate over two or more separate frequency allocations, for example a downstream frequency allocation at 24 Ghz coupled with an upstream frequency allocation at 36 GHz. This is possible through the partition of cell-site receiving and transmitting functions and the use of subscriber antennas that do not have equivalent transmitter/receiver patterns. This allows different numbers and different types of receiver or transmitter cell-sites to be implemented. Therefore, subscribers may receive signals from a more centralized location within an area while they transmit to a local receiver. This approach to system design, used as appropriate for specific system customers, implements repeater/concentrator functions on the upstream path.

The system design can be used within small coverage areas (for example a single room for small-scale Wireless LAN implementation) to large areas covering over 2000 km. One or more transport protocols (such as ATM, SMDS and other DQDB implementations, Frame Relay, and others) or interconnection protocols and standards (Ethernet) may be used to provide a basic structure for the transport of the communications. An array of transmitting, receiving and transceiving cell-sites is organized throughout the coverage area. Dense frequency re-use may be achieved using the appropriate modulation method or methods, subscriber and cell site antenna technologies, subscriber and cell-site antenna patterns, subscriber and cell-site power control algorithms and implementations, and on-air statistical multiplexing and burst response methodologies implemented using variable symbol-rate modulators, demodulators, modems, TDMA, FDMA, flex-FDMA access structures (flex-FDMA standing for flexible FDMA in which the channel bandwidth used by a particular premise varies over time depending on the traffic load) and various MAC methods. In addition, the partition of cell sites into receiving, transmitting and transceiving functionality and the use of subscriber antennas which do not have equivalent transmitting and receiving paths allow for increased isolation and increased customer bit rates and system data rates. In addition, the use of advanced subscriber antenna technology allows for primary and secondary cell-sites to be defined for specific subscribers, thus providing route diversity to combat rain attenuation and rain outage effects, which are the primary cause of outage within the large-area networks operating at frequencies above 10 GHz.

Within a 1 GHz band of frequencies (such as is common to LMDS at 28 GHz and MVDS at 40 GHz), cell service bit rates are extended to values of over 1000 Gbps, with higher values being possible. The typical calculation for these types of data rates uses the following equation:
1 GHz of allowed spectrum X
spectral efficiency of modulation methods (b/s/Hz) X
number of polarizations used (typically horizontal and vertical) X
number of sectors at a cell site =
maximum possible data rate for that cell
As an example, for 256-QAM modulation with 15% excess filtering, the spectral efficiency is 6.3 b/s/Hz. Using vertical and horizontal polarizations transmitted from each sector, with a 100 sector antenna, the data rate value is 1300 Gbps from that cell site. This level of data rate is partitioned between upstream and downstream paths in a manner suitable for the system and customer being serviced. The modulation scheme, antenna sectorization, channel filtering and error correction methods used will vary based on customer requirements.

The system can be designed to service areas as small as a single room and areas as wide as 2,000 km. or more, depending on the specifics of each installation and customer. Small areas require a minimum of bandwidth and cell site complexity, while larger areas require careful selection of modulation method (typically OFDM or its variants) and other system parameters (such as media access control methodologies for very large links). These large coverage areas are possible using modulator and demodulator methods currently available in the marketplace. These levels of bit rate densities, and the coverage areas which are possible, are a result of the unique design of the system.

Even with rain and multipath fading and its affects on outages, the unique system design discussed below allows for route diversity to combat rain and multipath fading affects.

Each subscriber has one or more antennas, transceivers and antenna control systems and is directed at one or more transmitting, receiving or transceiving cell-sites. Each subscriber antenna has an appropriately narrow set of one or more receive and transmit beams, with the polarization of the antenna being suitable to transmit and receive from the specified set of cell sites (whether they are transmitting, receiving or transceiving cell-sites). The system is capable of operating at any frequency or range of frequencies. Different frequency allocations affect the available RF bandwidth, antenna design physics, propagation path physics, and transmit/receive/transceiver implementation physics that must be accounted for within the system design specific to a particular customer and area.

Isolation of a subscriber from undesired transmissions or communications may be achieved through the use of polarization diversity, front-to-back subscriber antenna diversity, cell-site cross-polarized emissions, cell site antenna directionality, cell site effective isotropic radiated power (EIRP) control, modulation selection, frequency, time, space, and multiple channel reception and transmission, orthogonal and near-orthogonal code diversity via direct sequence and frequency hopping spread spectrum modulation, route diversity, cell site antenna height and location and subscriber antenna height and location with relationship to the surrounding buildings and obstacles such as trees, fences, overhead wires and metal poles.

Propagation phenomena affecting the system design includes rain fading, multipath selective fading, the effect of antenna height on multi-pathing occurrence, the effect of antenna height on distance-dependent path loss (i.e. the variation of the power law from less than 2 for propagation along city streets to greater than 6 for propagation in which the receiving and transmitting antennas are immersed below the average building height), the effect of directional antennas at both receiving and transmitting sites, the impact of foliage and ground cover causing seasonal receive level variations and short-term multi-pathing, the impact of the movement of people, trucks and wet foliage on short-term receive level variations and multi-pathing, and the architecture of urban areas on signal strength along streets and across streets. In particular, it is well-known that siting of the receiving antenna (whether at residential, commercial or industrial locations) and transmitting antenna will affect the propagation along and between streets as well as the propagation path over roof-tops, with diffracted signals propagating to the street below.

Therefore, preferred embodiments of this invention provide a communications structure that operates in a fashion transparent to the modulation method, frequency band or set of bands, or to the use of any or all of the devices discussed within this section. In addition, embodiments of this invention may employ specific methodologies and designs for interfacing wireless access systems with fiber/coaxial based ATM standards. Simpler, lower cost, lower-functionality systems may utilise one or more of these concepts. Advanced, higher cost, higher-functionality systems utilise a multiple of these concepts, with the highest functionality system utilizing all of these concepts to achieve unprecedented spectral efficiencies of over 1000 Gbps per sq. km.

For the purposes of this application, the system design concept and its associated equipment are referred to as the Wide-Area Wireless Distribution System (WADS). The WADS can exist in a very large number of configurations based on the system operator requirements, with multiple numbers of sites being implemented within an area. The WADS is intended to support wide-area networking based on SONET, ATM, SMDS, Frame Relay, DQDB and/or other technologies and with various protocol stacks and inter-mixed protocol stacks. The use of various inter-networking protocols and technologies does not detract from the fundamental system implementation concept outlined below.

### Brief description of the Drawings

In the accompanying drawings, which illustrate exemplary embodiments of various aspects of the present invention:
Figure 1 is a generic system diagram illustrating the layout of cells within a coverage area;
Figure 2 is an illustration of one equipment architecture within the subscriber site;
Figure 3 illustrates a typical installation for the transceiver cell-site;
Figures 4a, 4b and 4c illustrate three embodiments of CPE-R;
Figure 5 schematically illustrates the use of a pedestal UTP bridge;
Figure 6 illustrates an implementation of diversity reception at the home for UHF, VHF, and MMDS Digital TV MPEG Broadcast systems.
Figure 7 illustrates the use of different transmit and receive sectorization at the cell site or repeater/concentrator.
Figure 8 illustrates the use of two paths one of which is primary and one secondary, to mitigate rain-fading for fixed access systems.

### Detailed Description

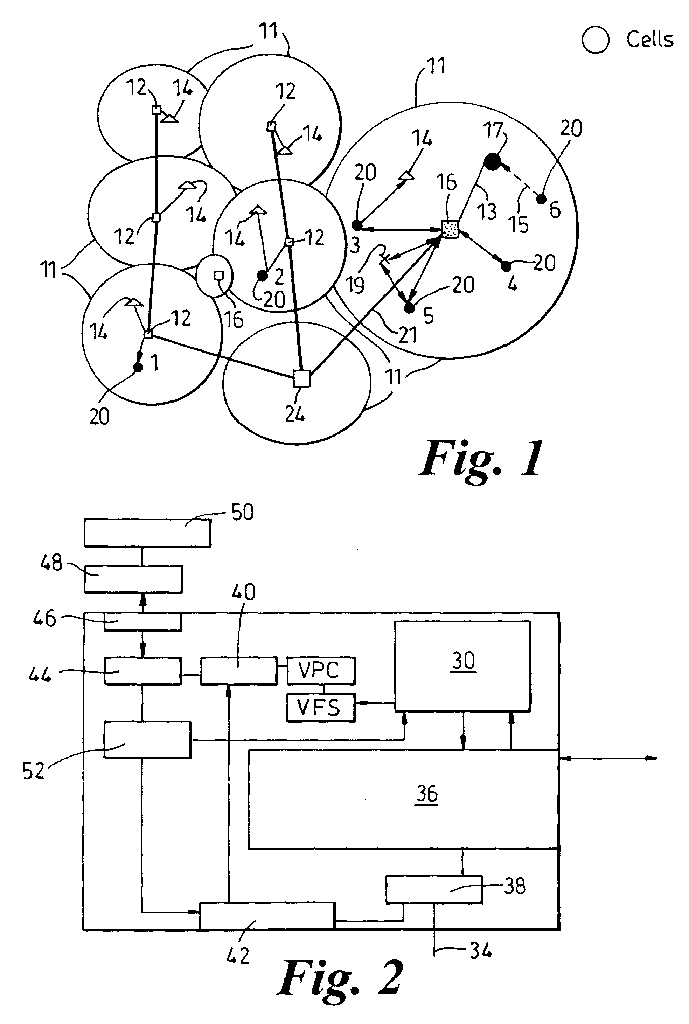

Referring to Figure 1, the illustrated system, 10, includes cell sites, 11, (including transmitter cell sites, 12, receiver cell sites, 14, and transceiver cell sites, 16,) repeater sites, X, subscriber sites, 20, monitoring sites, +, and master sites, 24. A WADS backbone is implemented using fiber interconnection of master sites and cell sites. Wireless access is used to interconnect repeater sites, subscriber sites and monitoring sites with the WADS backbone. Pedestal (Lamp-post) repeater sites are wireless to twisted pair repeater sites. WADS/UIP convertersave indicated by 17; repeater/connector site by 19; a UTP connection by 15 (-----), a wireless connection by 13 ( ); and a backbone network connection by 21( 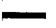 ).

### Site Definitions and Descriptions

A master site contains the primary interface from the outside world to the WADS system, and is connected to any of the other sites within the network. A master site may exist either as a single node or as a network or interconnection of nodes with distributed capabilities.

A cell site contains secondary or multi-primary interfaces to the outside world. Cell sites can be connected to any of the other sites within the network. Multiple cell sites may exist within a cell.

A repeater site is connected to the cell sites. The repeater site primary function is transporting and receiving information from cell sites, transmitter sites or receiver sites to the subscriber site using wireless repeating or using wireless to twisted pair conversion at a pedestal site.

Transmitter sites may be connected to all other sites, including receiver sites, Their primary function is to transmit information to the subscriber and/or repeater. System command and control information is received and transmitted by the transmitter site to potentially all other sites within the network.

Receiver sites may be connected to all other sites. Their primary function is to receive information from the subscriber. System command and control information is received and transmitted by the receiver site to potentially all other sites within the network.

Monitoring sites provide for system performance monitoring and control. They measure signal characteristics and relay the information back to the other system sites in order to provide for wide-area coordination of frequency, symbol, polarization, and spatial redundancy. The monitoring sites may be co-sited with other system sites, and may be implemented in hardware, software or a combination of these technologies.

Subscriber sites receive and transmit one or more data streams simultaneously, dependant on the subscriber equipment configuration. The subscriber sites are connected to the system via wireless links or via twisted pair connections to pedestal repeater sites. For wireless access, the subscriber site equipment consists of one or more antennas or antenna assemblies, one or more transceivers and associated frequency conversion, command and control, system monitoring and other functional elements consistent with the Implementation of wide-area data, voice, video, audio, television, interactive programming, interactive computing, distributing computing and other applications based on digital and analog communication methods.

The subscriber site is connected to one or more transmitter, receiver, repeater or cell sites via the primary connection based on wireless technologies using frequencies between 54 MHz and 140 GHz or via twisted pair methods. Referring once more to the drawings, Figure I is a generic system diagram illustrating the layout of cells within a coverage area. These cells are of arbitrary size, limited only by normal requirements for there to exist a received signal between the two locations during some percentage of the day, night or time-period. The coverage area, which is the collection of one or more cells associated with the system, is also of arbitrary size. In different embodiments, a coverage area may cover the entire surface of the earth or a single room in a house. Figure 1 illustrates all of the site types used within the design, including:
- transmitter cell site
- receiver cell site
- transceiver cell site
- transmit repeater site
- receive repeater site
- transceiver repeater site
- repeater/concentrator site
- system monitor site
- subscriber receive site
- subscriber transceiver site

The various types of subscriber sites are described as follows, with reference to the subscriber site numbering within Figure 1:
Subscriber Site Type I Receives broadcast communication from a transmitter site. No link from subscriber to receiver is present.
Subscriber Site Type 2 Receives communication from transmitter site, return path implemented to Receiver Site. (The receiver and transmitter sites are connected via a backbone network which is not shown).
Subscriber Site Type 3 Receives communication from transceiver site, return path implemented to transceiver site and receiver site, with network coordination algorithms determining whether one or both receive sites receive messaging.
Subscriber Site Type 4 Communicates with a transceiver site.
Subscriber Site Type 5 Communicates with a transceiver site and also with a repeater/concentrator site. The repeater/concentrator communicates with the transceiver via wireless or cable means. This subscriber site therefore is provided with two-way communication via two means, both of which may be transmitting or receiving·simultaneously.
Subscriber Site Type 6 Subscriber connects to a pedestal or local area connection using UTP (with ADSL, HDSL, or CAP technologies). The pedestal or local area connection connects to the fiber backbone using WADS.

Figure 1 illustrates round cells and a round coverage area for the purposes of discussion, however, the coverage area will be affected by the urban topography of buildings and streets. The coverage area shape is also affected by the height of the transmitting and receiving antenna above or below the average height of buildings in the area.

Figure 2 is an illustration of one equipment architecture within the subscriber site. The equipment 30 has a link 32 to a subscriber and a modem port 34 (RS-232). The link 32 inputs to a switch 36 which operates with reference to a first control unit 38 which outputs signal for transmission via a variable frequency shift and variable power control units VFS, VPC. The signals from the VPC are combined in combiner 40 with signals from control modem 42, passed to duplexer 44, power duplexer 46 and beam forming means 48 and are transmitted via antenna 50. Received signals are received via antenna 50, beam forming means 48, duplexer 44, before being split at splitter 52.

Modem related signals are passed to the control modem which is linked to controller 54, which itself is linked to the switch and the modem port. Other subscriber signals are directed from the splitter to control element 38, which is linked to link 32 via switch 36. The modulator/demodulator pair may implement the same modulation scheme or different schemes, and the equipment may be selectable between different schemes and FEC methods based on hardware or software switches. The subscriber site also has VFC (Variable Frequency Control) and VPC (Variable Power Control), which are standard features already provided within cellular phone systems.

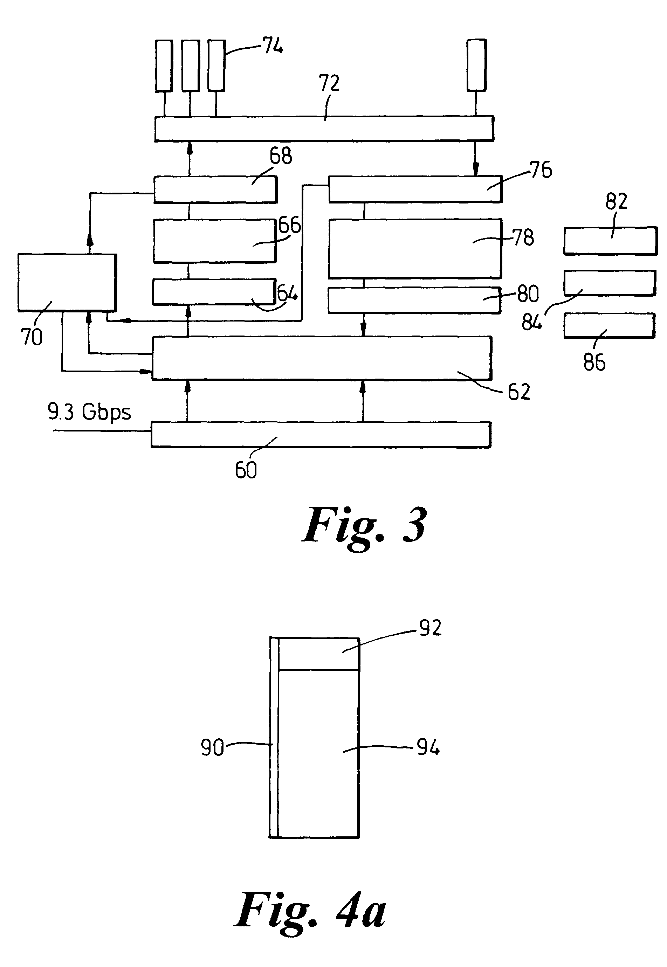

Figure 3 illustrates a typical installation for the transceiver cell-site. The transceiver cell-site consists of digital equipment which interfaces to the backbone network and microwave equipment and antenna sub-assembly. The digital equipment may be indoors or outdoors depending on the design of components and packaging. Figure 3 illustrates a transceiving cell site for an ATM connection system. The technologies currently available in the public domain can be applied to the construction of cell sites which range in data rate from 155Mbps or less to 1000 Gbps or more, as described herein. Specifically reference numeral 60 represents the summit interface which interfaces with ATM switch 62, on the transmission side the switch provides the signal to 360 modulators which pass signals to variable frequency shift and variable power control elements 66 which provide signals to combiners 68. The combiners also receive signals from control channel modem 70, which is also linked to the ATM switch. The signals from the combiners are passed to duplexers, one for each sector and passed to antenna sectors with integrated transceivers, the antenna sectors numbering 60 in total. On the receiver path the signals from antenna 74 are passed to duplexers 72 to splitter 76 which splitters are linked to control channel modem 70. This splitter 76 also output to demodulators available to use and equalization elements 78 which are passed to a multiplexor 80 before being passed to ATM switch 62. There is provided a test port 82 powering and controlling busses and architectures 84, 86, as known to those skilled in the art.

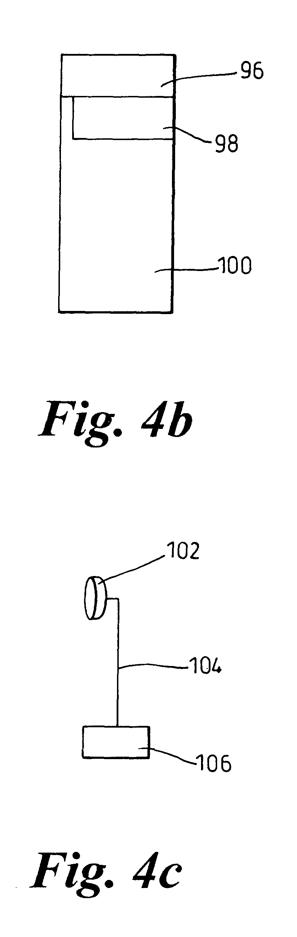

Figures 4a, 4b and 4c illustrate implementations of CPE-R, a customer premise equipment item for residential users. Figures 4a and 4b show integrated antenna/receiver/digital equipment configurations and figure 4c shows a more typical installation with outdoor antenna and transceiver being connected to indoor digital equipment.

The CPE-R implementations of Figures 4a and 4b feature integrated antenna elements. Additional benefits of this type of design include increased frequency stability of the local oscillators, reduced cable losses over the VHF frequency range, decreased installation cost because of the single unit construction, decreased production costs, decreased packaging costs, increased yield and decreased breakage of CPE elements. Specifically, in Figure 4a, there is shown a CPE-R customer premises equipment shown in side view having an integrated flat panel antenna 90 with transceiver and microwave elements 92 provided behind the antenna together with digital elements 94. Figure 4b shows basic components of a customer premises equipment with an integrated lens/horn/parabolic antenna with transceiver and microwave elements 98 and additional elements 100 associated with the same housing. Figure 4c shows a customer premises equipment, showing antenna with integrated transceiver 102 connected by connector cabling 104 to additional elements 106 located inside a house, for example.

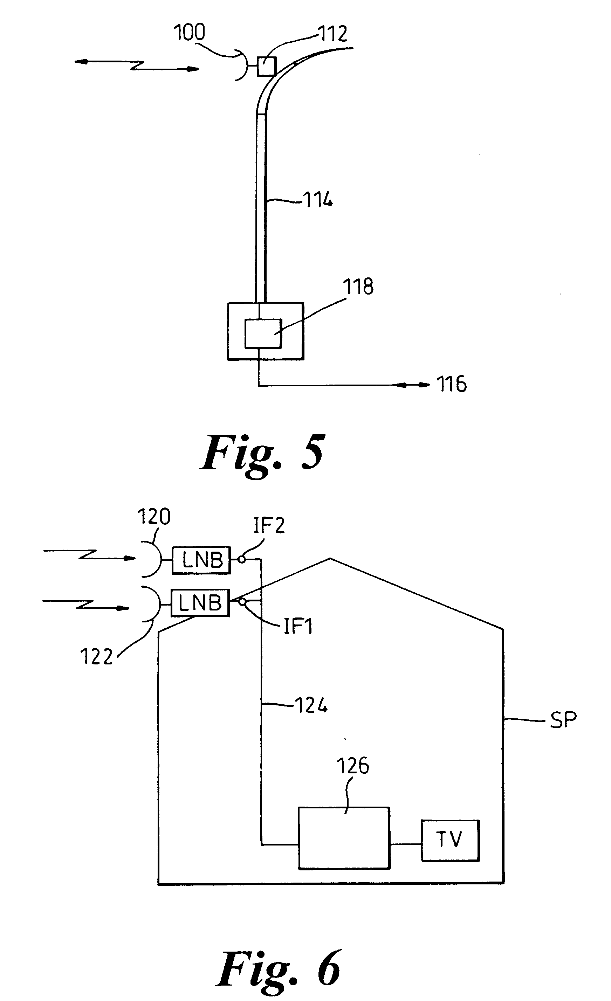

Figure 5 illustrates the use of the WADS to provide an intermediary link between backbone network and local UTP (Unshielded Twisted Pair) connection point, called a pedestal 114. In this case, the cell-site communicates with a Wireless to UTP bridge or router, with the customer then receiving communication via UTP into the home or building 116 by way of wireless twisted pair transition equipment 118. Multiple configurations for this equipment, connecting from a single subscribe to many subscribers, are possible. Various designs for antennas 110, transceivers 112 and pedestal digital equipment 114 are possible depending on the details of system operator connection requirements.

Figure 6 illustrates the implementation of diversity reception at a subscriber site for UHF/VHF/MMDS and other Digital TV and MPEG broadcast systems through the use of two receive antennas 120, 122 with different LNB oscillator values, which output signals by cable 124 to a set-top box 126 of design which allows for the evaluation of RSSI and BER within the set-top box at the demodulator level.

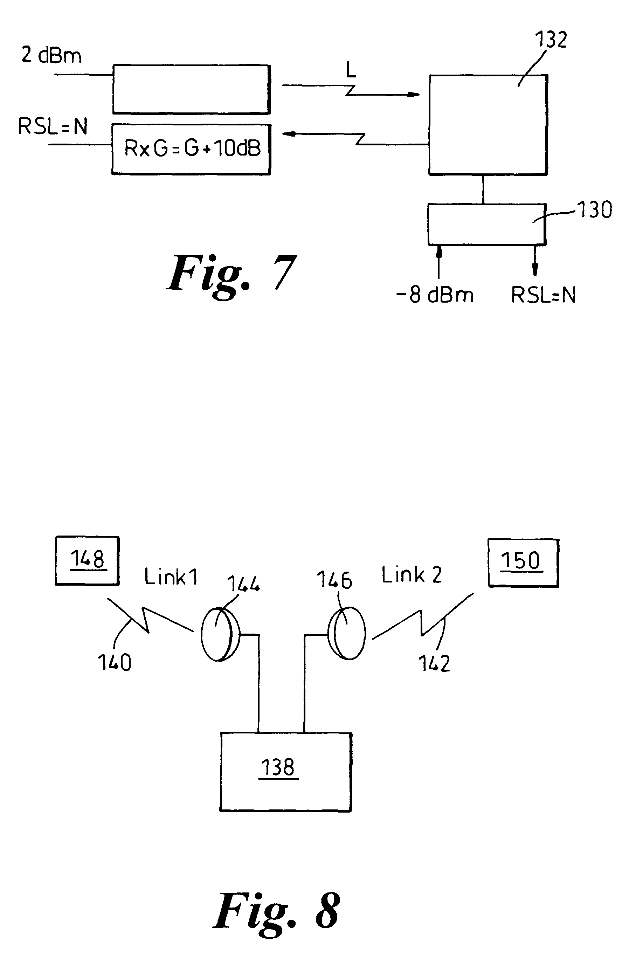

Figure 7 illustrates the use of different transmit and receive sectorization at the cell site and/or repeater/connector to accomplish decreased subscriber site transmit powers.

Figure 8 illustrates the Use of Multiple Antenna technology at a Subscriber Premise to provide for rain fade effect mitigation based on the use of secondary links to transceiver, transmitter and receiver call sites.

The design and operation of the present system when used with Wireless ATM and Wireless IP transport technologies constitute a complex of many factors, the primary ones which are described below and summarized in the following list:
1. Systems which use variable bandwidth modems to achieve the various behaviours of the claims below, with the system providing for the control and configuration of the modems on a dynamic per-session basis.
2. Dynamic Bandwidth Allocation (DBA) algorithm for FDMA Wireless ATM and Wireless IP systems, based on using ratios of CBR, VBR, ABR, UBR traffic types and priority types in order to mitigate rain fading events. This dynamic bandwidth allocation requires the use of variable rate and variable modulation modems.
3. In-band trunking systems for single frequency networks
4. Mapping of wireless ATM signalling messages to ITU Q.2931 or ATM Forum UNI 3.2/4.0.
5. Wireless IP addressing architecture.
6. Segmentation and Reassembly of MPEG2 over ATM with PID mapping to VCC.
7. Broadband systems which do not use hardware guard band filtering, but instead provide for software guard band (SGB) algorithms in which receive and transmit frequencies are separated by a reasonable amount within the system design to allow for spectral re-growth, inter-modulation, and interference effects.
8. Inverse Multiplexing method for Wireless OC3 delivery.
9. Use of pedestal UTP Bridges to provide twisted pair connectivity to the subscriber sites.
10. Implementation of diversity reception at subscriber site for UHF/VHF/ MMDS and other Digital TV MPEG broadcast systems through the use of two receive antennas with different LNB oscillator values, followed by a set-top box design which allows for the evaluation of RSSI and BER within the set-top box at the demodulator level.
11. Use of idle cell discard algorithms for wireless ATM links in the upstream direction from subscriber to cell site.
12. Use of different transmit and receive sectorization at the cell site to accomplish decreased subscriber site transmit powers.
13. Spatially diverse cell-site receive and transmit locations.
14. Use of multiple antenna technology at subscriber premise to provide for rain fade effect mitigation based on the use of secondary link to transceiver, transmit and receive cell sites.

Each of the above key technologies and algorithms is discussed in more detail below.
1. Systems which use variable bandwidth modems to achieve the various behaviours of the claims below, with the system providing for the control and configuration of the modems on a dynamic per-session basis.
Wireless access systems of previous technology generations used fixed modulation schemes and fixed bandwidth allocations to support mobile applications such as mobile telephony (AMPS, digital cellular, PCS) and mobile data (PCS, CDPD). Broadband fixed wireless access systems within our design use variable bandwidth modems capable of operating over a range from 0 to 20 MHz, variable modulator settings from QPSK, 16QAM and 64QAM, and variable forward error correction methods such as Reed-Solomon, Viterbi and convolutional, with the exact settings of each of these software settable parameters being dependant on the system operator and subscriber service requirements.
Within this claim, systems which use variable bandwidth capability are unique. This variable bandwidth capability is used to provide various data rates to subscribers, it is used to provide coverage area size evolution for system operators (because modems operating in QPSK mode with a 2 MHz bandwidth have a thermal noise floor which is 10 dB lower than a 20 MHz bandwidth, which therefore achieves increased coverage distance), and it is used to provide rain fade mitigation, which is achieved by reducing the channel bandwidth during rain fading events.
2. Dynamic Bandwidth Allocation (DBA) algorithm for Wireless ATM and Wireless IP systems, which allows a specific ratio of high-priority or CBR traffic as related to lower-priority or VBR, ABR, UBR assignments on a per channel basis. This dynamic bandwidth allocation requires the use of variable bandwidth, variable modulation format and variable FEC (Forward Error Correction) modem equipment.
For Wireless ATM and Wireless IP systems operating at frequency ranges above 10 GHz, rain fading effects are the primary cause of outages. The system incorporates modem elements that allow for software provisioning of the following parameters:
· modulation may be selected as QPSK, 16-QAM, 64-QAM, 256-QAM
· Forward Error Correction may be selected as Reed-Solomon, Viterbi, or a combination of these and other standard techniques channel bandwidth may be selected at a range from 0 MHz to 20 MHz

The four types of traffic which are defined to be carried by the wireless links are CBR (Constant Bit Rate), VBR (Variable Bit Rate), ABR (Available Bit Rate) and UBR (Unassigned Bit Rate). During normal system operation on clear days (no rain fading), a particular MBU (Multiple Business Unit) or MDU (Multiple Dwelling Unit) or other subscriber site will have various amounts of each of these traffic types. The modems at the subscriber site will have an opportunity to operate at QPSK, 16QAM and 64-QAM levels or with other modulation methods, with various channel bandwidth values and with various FEC methods. During clear days the modems may operate at 64-QAM levels with minimal FEC in order to maximum the spectral efficiency and support a data rate of N Mbps. A specific ratio of CBR, VBR, ABR and UBR traffic types are then allowed by the Dynamic Bandwidth Allocation (DBA) algorithm, with the value of the ratio discussed below.
During operation, in the event of a rain-fade event, additional link margin may be required by this link. This additional link margin is accomplished by decreasing the modulation constellation from 256QAM to 64QAM to 16QAM to QPSK depending on the severity of the rain fade. If the channel bandwidth and FEC method are not changed during this decrease in modulation rate, this reduction in modulation method therefore reduces the total data rate that can be provided to the subscriber, which therefore forces the low priority traffic to be limited while maintaining the high or higher priority traffic at the same rate. For example, CBR traffic may the high priority with VBR, ABR, UBR being the lower priority. In this case, the ratio of CBR traffic to VBR, ABR and UBR traffic is dependant on the modulation methods used, as illustrated in the table below. In this table, the excess bandwidth is assumed to be 15%, which then provides a spectral efficiency for each modulation method of 6.3 b/s/Hz for 256QAM, 5.0 b/s/Hz for 64QAM, 3.5 b/s/Hz for 16QAM, and 1.5 b/s/Hz for QPSK.

**Table 1.**

| Percentage of CBR traffic allowed for various modulation changes in the presence of constant channel bandwidth and constant FEC method. | | |
|---|---|---|
| Modulation Transition During Rain Fade | Ratio of Spectral Efficiency | Percentage of CBR Traffic Allowed |
| 256QAM to 64QAM | 5 / 6.3 = 0.794 | 79% |
| 256 QAM to 16 QAM | 3.5 / 6.3 = 0.55 | 55% |
| 256 QAM to QPSK | 1.5 / 6.3 = 0.238 | 23% |
| 64QAM to 16QAM | 3.5 / 5 = 0.7 | 70% |
| 64QAM to QPSK | 1.5 / 5 = 0.3 | 30% |
| 16QAM to QPSK | 1.5/3.5 = 0.428 | 42% |

Additional tables can be constructed for different mixtures of excess bandwidth and Forward Error Correction (FEC) methods. Additional tables can be constructed for systems in which the bandwidth of the channel (0 to 20 MHz or more) can be varied during operation.
As an additional example, consider an operator that implements a system and DBA as follows:

**Table 2.**

| Example of Specific System Implementation to Mitigate Rain Fading | |
|---|---|
| Modulation Approach | Normal operation at 16-QAM, with migration to QPSK |
| FEC Approach | Constant all the time |
| Channel Bandwidth Approach | Normal operation at 9 MHz, with migration to 20 MHz |

In this case, the 9 MHz, 16QAM link will deliver the same data rate to the subscriber as the 20 MHz QPSK link. The thermal noise floor will expand for the QPSK link, however the transmitter power amp back-off required for QPSK is reduced and the carrier to noise ratio (CNR) required at the receiver is reduced, thus leading to improvements in the link performance during the rain fade event. In this case, there is no requirement to limit the lower priority traffic because the data rates offered to the subscribers are the same. The additional fade margin that is required during the rain fade event is provided by this transition.
The specific feature being patented, therefore, is any dynamic bandwidth allocation (DBA) algorithm that uses the concept of limiting the ratio of higher priority to lower priority traffic types in order to allow for modulation, bandwidth and FEC changes to be used during rain fade events. Each system operator that manages a flexible system will have implement different specific approaches within this design concept. The DBA algorithm and specific implementations of the algorithm can accommodate both FDMA and TDMA access systems designs.
3. In-band trunking systems for single frequency multi-cell networks, in which the distribution polarization in each cell is the same and in which the trunking_polarization is the same and is cross-polarized from the distribution polarization.
Single frequency networks are defined as systems which distribute signals on the same frequency. In addition, the concept of trunking between these distribution sites using the same frequencies cross-polarized with the distribution frequency is novel. In this system design method, all trunking links are polarized in one method (e.g. either vertical or horizontal) and the distribution sites are cross-polarized from the trunking links. In this approach, the subscriber antenna front-to-back ratios and cross-polarization discrimination is used to provide good performance in all of the interference zones that occur. This system design is novel, in that classical analog MMDS systems use cross-polarization of distribution cells. This system design does not use frequency conversion circuits at the various repeater / distribution towers within the trunking design, and therefore no degradation of phase noise is observed along the trunking route.
The in-band trunking design is achieved through proper isolation on the trunking / distribution tower. For example, testing has shown that isolation values of 100 dB can be achieved at 2.5 GHz for a tower equipment orientation in which the distribution antenna is 100 feet above the receive trunking antenna. This value of 100 dB therefore allows a gain of 70 dB on the tower, thereby achieving a Carrier to Interference (co-channel) value of 30 dB. 30 dB C/I value is sufficient for the final leg of a in-band trunking system which uses 16-QAM modulation. The in-band trunking repeater equipment can be operated in a fixed gain mode (in which the gain of the repeater does not change with input signal level) or it may be operated in a ALC or AGC mode. For a fixed gain in-band trunking system, the C/I value at the tower will be maintained at a constant value when fading occurs, and therefore the C/N value of the distributed signal is allowed to vary. For repeater equipment offering ALC capability, the gain of the repeater varies while fading occurs, which therefore causes the C/N value to remain constant while the C/I value on the tower site decreases and increases. Both of these design approaches are consistent with the in-band trunking discussed above.
In addition, the intermodulation noise and the cascaded intermoduation noise the is built up along of series of these in-band trunking hops must be accommodated for within the specific design of the trunking and distribution system. The accommodation of the intermodulation noise within this design can be accomplished using waveguide filtering to allow for the reduction of out of band C/CTB emissions or the design can be such that it does not require waveguide filtering. Both of the these approaches to intermodulation control are within the scope of the in-band trunking claim.
4. Mapping of wireless ATM signalling messages to ITU Q.2931 or ATM Forum UNI 3.2/4.0
The WADS covered under this patent is fundamentally different from wire-line ATM systems. The physical layer of WADS is a Point to Multipoint system compared to wire-line ATM physical layer which is a point to point system. Notice that ATM networks provide point-to-multipoint service, but that this service is a logical view of several point to point connections. Because of this fundamental architectural difference, there is a need to map signalling messages from the wire-line ATM network which were designed to support point to point connections to wireless signalling messages which are designed to operate in a point to multipoint environment.
The wireless network node communicates with the ATM switch using standard signalling protocols as defined by standards bodies such as the ITU, the ATM Forum, and ETSI. Signalling information and management information between the wireless network node and the ATM switch are exchanged using well-know virtual connections such as VPI/VCI=0/5 and VCI/ VCI=0/16. However, the wireless network node cannot address all users in the point to multipoint environment using the same signalling virtual connections.
Therefore, the design uses one unique virtual connection (VPI/VCI) for call control messages and one unique virtual connection (VPI/VCI) for management messages is allocated for each user in the point to multipoint system. Each user recognizes its own signalling and management virtual connections and ignores all other signalling and management virtual connections. The wireless network node performs the mapping between the standard signalling VPI/VCIs and the individual virtual signalling connections of each user. This mapping function is performed based on information in the call setup message such as the called party number or any other parameters that may be appropriate depending on the nature of services being provided collectively by the wireless network node and the wire-line network. Mapping of subsequent message is done based on the call reference value.
In addition, due to the fact that the physical layer is configured in a point to multipoint fashion, we are able to define a multicast and a broadcast signalling VPI/VCIs. The multicast VPI/VCI addresses a group of users and the broadcast VPI/VCI address all the users.
The specific values and the number of values of VPI and VCI that are used for this signalling mapping change based on system operator requirements, and these variations are consistent with the Wireless ATM Signalling design detailed above.
5. Wireless IP addressing architecture
With a regular dial-up Internet Service Provider (ISP), addressing is typically assigned on a per connection basis through the modem that the user is connected to. This architecture is functional for dedicated connection networks, in which the user modem is connected to a specific ISP modem within the ISP modem bank, however, for a wireless system sharing of modem devices at the user's end is possible.
Therefore, this design allows each PC at the customer's premise to use the wireless modem serial number to communicate with the cell site. This design uses a serial number which is dedicated to a specific wireless modem. In addition, at the CPE each PC has a class A IP address (fake IP address) and uses the physical layer address for traffic between entities at the customer site. This will prevent local traffic from exiting the local LAN.
Next, we discuss addressing of IP messages sent from the customer's PC to the Internet and from the Internet to the customer's PC. First, we start with messages sent from the customer's PC to the ISP and then messages sent from the ISP to the customer's PC.
At the customer site there can be more than one PC. Each PC has a fake IP address (class A address). When one of the PCs at the customer side wishes to communicates with the ISP, it sends a message to the wireless modem. When the wireless modem recognizes that a message is addressed to it, it knows that this message has to be forwarded to the cell site equipment. Because communication between the entities at the customer premise side is done over Ethernet, and in order to send the Ethernet packet to the cell site, the wireless modem strips of the Ethernet address, segments the message into the appropriate wireless packet, adds its serial number to every packet, and sends each packet on its allocated upstream traffic time slots. The cell site equipment re-assembles the original Ethernet packet, swaps the fake IP address with the IP address provided by the ISP for that connection, and forwards the Ethernet packet to the ISP equipment.
Addressing of IP traffic from the ISP to the customer's PC is done as follow. The ISP sends an Ethernet packet with the destination IP address to the cell site equipment. The cell site equipment takes the Ethernet packet and strips off the Ethernet address. The destination IP address is matched with a wireless modem serial number and a fake IP address from a table maintained by the cell site equipment. Once a match has been found, the destination IP address is changed with the fake IP address and the message is segmented into wireless downstream packets. The addressed wireless modem serial number is now added to every downstream wireless packet. The customer wireless modem listens to the downstream channel and recognizes the packets with its serial number. These packets are then assembled into an Ethernet packet and the Ethernet address corresponding to the fake IP address is added to the message. Finally the message is sent over the Ethernet to the customer's PC.
6. Segmentation and Reassembly of MPEG2 over ATM with PID mapping to VCC.
Each MPEG2 stream is identified by a unique 13 bits Packet Identifier (PID). A separate PID is used for the audio and the video MPEG2 streams. To transport MPEG2 packets over ATM it is necessary to map each MPEG2 stream onto a unique Virtual Channel Connection (VCC). At the date of this patent submission there are no standards for doing this mapping. The VCC is identified by a Virtual Path Identifier (VPI) and a Virtual Channel Identifier (VCI) fields of the ATM header. Therefore, we perform a direct mapping between the MPEG2 PID and the ATM VPI/VCI.
Segmentation and reassembly is performed on MPEG2 packets so that the MPEG2 packets can be carried by the ATM. Four SARing algorithms are outlined as follow:
1. Mapping of one MPEG2 packet into an AAL5 packet using standard AAL5 SARing procedures. This results in the creation of an AAL5 packet which is five ATM cells long.
2. Mapping of three MPEG2 packets into one AAL5 packet using standard AAL5 SARing procedures. This results in the creation of an AAL5 packet which is 12 ATM cells long.
3. Mapping of one MPEG2 packet into four ATM cells using a proprietary SARing algorithm.
   Each MPEG-2 packet is segmented into four segments and mapped onto four ATM cells. The last ATM cell contains four bytes which are used for control and reassembly (see figure below). An end of MPEG2 packet flag is indicated in the 45^{th} bytes. Followed the end of packet flag is a three byte field containing a Cyclic Redundancy Checksum sequence which is able to detect and correct transmission errors. 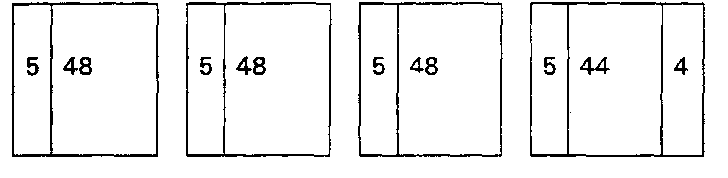 The segmented MPEG-2 packet is as follows:
   The payload of the last packet is: 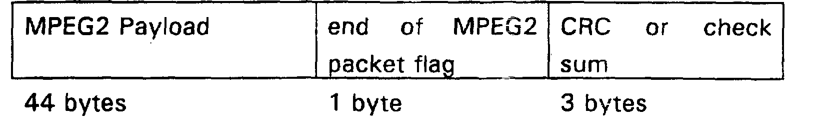
4. Mapping of one MPEG2 packet into four ATM cells using a proprietary SARing algorithm where the last ATM cell is marked with PTI file set to one. Similar to method number 3. Each MPEG-2 packet is segmented into four segments and mapped onto four ATM cells. We use the Payload Type Indicator field in the ATM cell header to indicate the last cell of the of an MPEG2 packet. The PTI field of the last ATM cell is set to PTI = 1. For the previous three ATM cells the PTI field is set to PTI = 0. The four bytes filed in the last ATM cell are used for CRC-32 to detect and correct transmission errors. Notice that this algorithm is different from the AAL5 algorithm in that a constant length packets are being SARed and therefore the length and padding fields of the ALL5 are removed allowing us to fit one MPEG2 packet in four ATM cells.

7. Broadband systems which do not use hardware guard band filtering, but which instead use software guard band (SGB) algorithms, in which receive and transmit frequencies for specific users are separated by a reasonable amount to allow for spectral re-growth, inter-modulation and interference effects thus_providing flexible assignment of the upstream and downstream frequencies.
This concept of broadband microwave equipment with variable bandwidth modems that allow channelization can be used to provide varying receive and transmit frequencies. For example, during the day when commercial data connections are being used, the majority of the connections may be symmetrical , in which case an equal portion of the licensed frequency will be assigned in the upstream and downstream direction. At night, however, the majority of the traffic requirement may be residential Internet access, in which case the operator may wish to use most of the licensed frequency for downstream communication and less for upstream. The system design required to provide this feature cannot use hardware filtering to dictate upstream and downstream channels, because this will limit the system flexibility. Instead, an SBA algorithm is required which operates at the cell site and which allocates receive and transmit frequencies to subscriber terminals in order to provide a reasonable frequency separation between the Rx and Tx frequencies, thus creating software guard bands instead of hardware guard bands. The definition of the term "reasonable" will vary between system operators and between licensed frequency bands. This claim is applicable to any broadband system which does not use fixed upstream and downstream channelization which is limited by hardware filtering.
The implementation of the receive and transmit equipment may use separate receive and transmit antennas at the subscriber and / or cell site (which therefore allows full-duplex communication due to the high isolation values that can be achieved), or can be implemented using a common antenna with suitable cross-polarization or frequency diversity between transmit and receive bands. Either type of implementation is consistent with this claim as long as hardware guard band filtering does not limit the system.
8. Inverse Multiplexing method for Wireless OC3 delivery.
This technology applies the concept of inverse multiplexing to wireless links. Consider the following example. Assume that a single user has requested a service at the OC3 data rate of 155.52 Mb/s. The propagation characteristics to that user allow for only 18 Mb/s wireless links to be established. This limitation is dependent on the particulars of the propagation between the transmitter and the receiver. In this case, we provision 9 wireless links, each operating at a data rate of 18 Mb/s. Each link transports a portion of the OC-3 traffic.
In the transmit direction (from the ATM wire-line to the ATM wireless), seven ATM cells are packed into one wireless packet. Each wireless packet is sent over a different link in a round-robin fashion, such that each wireless link carries the equivalent of 1/9^{th} of the OC-3 data rate. Idle ATM cells may be inserted into the wireless packets to ensure proper rate de-coupling between the higher speed OC3 link and the slower speed wireless links. The wireless packet contains a sequence counter that is used to ensure cells are reconstructed in the same order they have arrived. The process of splitting the incoming traffic into several slower parallel wireless paths is called the un-bonding process.
In the received direction (from the wireless ATM to the wire-line ATM), wireless packets from the parallel paths are recombined into a single stream of ATM cells. ATM cell order is preserved using the sequence counter field. The recombined ATM stream is sent to the OC-3 wire-line interface. Idle ATM cells are extracted at the receive process so as to ensure that cell inter-arrival time from all the parallel paths is maintained. The process of combining ATM cells from different parallel paths is called bonding.
Buffers are provided in the transmit and receive directions so that cell timing is preserved during the bonding and the un-bonding processes.
The system is not limited to just 9 parallel paths. Any number of parallel paths from 2 through 9 and above may be used to provide an end-to-end transmission path for any number of wire line data rates such as DS3, E3, OC-3, and OC-12.
This algorithm includes the ability to gracefully recover from one or several wireless links failure, which may be the result of a component failure or a temporary path interference. Under this type of failure, the traffic rate being offered to the wireless system may be greater than what the wireless links can carry. The system will initially perform a cell level discard or packet level discard based on either the Cell Loss Priority (CLP) bit or the Payload Type Indicator (PTI) of the ATM header to match the offered data rate to the transmission capacity of the remaining links. The system may incorporate traffic shaping techniques and end to end flow control algorithms on the ABR and UBR ATM traffic type to reduce the input traffic from the OC-3 until it matches the capacity of the remaining functioning wireless links, and cells discard is no longer required.
9. Use of Pedestal UTP bridges to provide UTP (Unshielded Twisted Pair) high-bandwidth connectivity to subscribers.
The WADS can be used to provide an intermediary link between backbone network and local UTP (Unshielded Twisted Pair) connection point, called a pedestal. In this case, the cell-site communicates with a Wireless to UTP bridge or router, with the customer then receiving communication via UTP into the home or building. This is diagrammed in Figure 5 for a typical configuration. Multiple configurations for this equipment, connecting from I subscriber to many subscribers, are possible. Various designs for antennas, transceivers and pedestal digital equipment are done depending on the details of system operator connection requirements.
10. Implementation of diversity reception at subscriber site for UHF/VHF/ MMDS and other Digital TV and MPEG broadcast systems through the use of two receive antennas with different LNB oscillator values, followed by a set-top box design which allows for the evaluation of RSSI and BER within the set-top box at the demodulator level.
For systems using frequencies from 54 MHz to 10 GHz, the primary outrage mechanism is multipathing. In order to mitigate multipathing, two or more antennas are provided at the subscriber premises. This is shown in Figure 6. These antennas 120, 122 have integrated or non-integrated LNB (Low Noise Block Downconverters) with different oscillator frequencies. A common cable 124 from the indoor equipment 126 (set top or multiple set-top box) is connected to both LNBs. The indoor equipment will have two sets of signals one set at a frequency such as 222 - 408 MHz and another set at a higher frequency (for example, 600 - 786 MHz). Both of these frequency ranges contain exactly the same data, the only difference is in the value of the Intermediate Frequencies, IF1, IF2. Both of these downconverted frequencies can observed by a set-top box which has a tuner that covers these ranges. Within the set-top box, the various TV channels that are defined by the system operator have associated with them a pair of frequencies (one from the 222 - 408 MHz range, the other from the 600 - 786 MHz range) and a set of PID (Packet Identification) values from within the MPEG2 specification and standard. For example, channel 2 may be specified as frequency 225 and frequency 606, with PID values at both frequencies being Video = 1, Audio = 2. When the subscriber is using the set-top box and selects a specific TV channel, the set-top box first looks within the 222 - 408 MHz range for the channel. If the received signal level or bit error rate is too high the set-top box checks the higher frequency block (600 - 786 GHz in our example). This approach achieves the use of a single coaxial cable to the outdoor equipment, and mitigates the multi-path fading that occurs on the link because two antennas are available. These outdoor or indoor antennas are typically separated by 10 wavelengths in order to achieve a low correlation value for the received signal levels. Notice that for MMDS systems, the wavelength is roughly 10 cm, leading to a typical spacing of the antennas in the range of 100cm.
The approach listed above obviously works with different antenna types various spacings of antennas, and various IF frequency ranges. The approach can also use one tuner/demodulator section for lower cost or multiple tuner/demodulator sections for redundancy reasons without changing the basic principle of the design. The approach will operate at UHFNHF frequencies, MMDS frequencies and other system frequencies which suffer from multipath. The antennas at the subscriber can be pointed at the same distribution antenna or to different distribution antennas within the area, with these different distribution antennas being separated by distances of small or large distances. The subscriber antennas can be mounted on two different sides of a house or building, on the same side, at different vertical heights, all of which is still consistent with this design concept.
11. Use of idle cell discard algorithms for wireless ATM links in the upstream direction from subscriber to cell site..
Within standard ATM for fiber environments, the ATM links operate with fixed rate connections in which idle cells are inserted to ensure a constant rate. Within wireless links, this would lead to a low system efficiency because the wireless links are a shared resources among all users. The use of idle cell discard algorithms is therefore a unique feature of wireless ATM systems, and is claimed. The specific idle cell discard algorithms that are used depends on the type of traffic, whether CBR, VBR, ABR or UBR, and on the specific QoS (Quality of Service) contract which is in force. The idle cell discard algorithm may be turned on or off, depending on the traffic type.
The idle cell discard algorithm is not used from the cell site to the subscriber, because a constant rate data stream is required to maintain subscriber synchronization and timing. Instead, idle cell discard is used from the subscriber site to the cell site (the upstream direction), so that only useful subscriber data is transmitted.
12. Use of Different Transmit and Receive Sectorization at the Cell Site and/or Repeater/Concentrator to accomplish Decreased Subscriber Site Transmit Powers
At the cell site, highly sectorized antennas are used to provide for higher bandwidth into the cell coverage area, both for the upstream and the downstream directions. In addition, the sectorization of the receive antenna is increased to beyond that of the transmit antenna, thereby providing increased gain on the upstream path. This increased gain allows for a proportional reduction in the subscriber side transmit power, thereby mitigating health concerns at the subscriber site, providing lower cost subscriber site equipment and also allowing for zero guard band frequency allocations within the system.
Zero guard band frequency allocations are accomplished as shown in Figure 7 in which the lower transmit power coupled with the transmit to receive circuit isolation of approximately 10dB allows for inexpensive subscriber equipment implementations. For the purposes of this example, it is assumed that a 2 dB transmit power is used at the cell site or repeater/concentrator and that the subscriber LNA can sustain a maximum RSL of 18-dBm prior to distortion, and that the subscriber duplexer 130 provides 10 dB of isolation between subscriber transmit to receive circuits. Without the receive antenna 132 sectorization, the transmit power at the subscriber link is required to be the same as the cell site or repeater/concentrator transmit power (i.e. 2dBm).
Path loss of the links is represented by L, transmit antenna gain by G, receive antenna gain is represented by RxG. However, with a 10 dB sectorization gain increase the required transmit power at the subscriber is reduced to a value if -8dBm, which provides cost savings and health effect savings.
Obviously, if the subscriber LNA maximum input signal prior to distortion is - 20dBm, the Rx Antenna at the cell site or repeater/concentrator can be specified at gain = G + -20dBm - Duplexer Isolation, which allows for various coordinated specifications of subscriber and cell-site and /or repeater/concentrator site equipment. In all cases, the Received Signal Level (RSL) is equal to the value N on both downstream and upstream links, which therefore provides equal quality of service (QoS) in both directions.
13. Spatially Diverse Cell-Site Receive and Transmit Locations
Cell sites may exist as transmit only sites, or as transceiver sites. The purpose of the separation of the transmit and receive functions is to provide increased isolation between the two functions, leading to increased bandwidth efficiency. The second purpose of the separation of transmit and receive sites is to allow for a higher number of transmit or receive sites, so that bandwidth efficiency on both the upstream and downstream is optimized for specific applications. As the separation between the receive and transmit site functions increases, the first effect is an increase in the isolation. In those cases where a system has more receive sites than transmit sites, the subscriber antennas, having both a receive main lobe which may point in different directions can allow for upstream reception at much higher signal levels, leading to lower cost subscriber equipment, reduced emissions at the subscriber premises to allay health concerns, and increased system performance.
14. Use of Multiple Antenna technology at Subscriber premise to provide for rain fade effect mitigation based on the use of secondary links to transceiver, transmitter and receiver cell sites.
At the subscriber premises, current system designs for MMDS systems have included a single antenna element for the transmission and reception functions. Based on advanced antenna technology and based on the frequency of operation for the system, it is possible to implement multiple antenna elements at the subscriber premises. These multiple antennas can be used to provide for route diversity in order to mitigate rainfall attenuation and also can be used to provide for spatial diversity in order to mitigate multi-path attenuation. This approach is diagrammed in Figure 8.
The drawing is applicable to either a subscriber premises configuration or a pedestal equipment configuration. First and second links 140,142 can be used as a primary and secondary link configuration, between the customer's premises 138 and cell sites 148, 150, in which the primary link is used until the signal level falls below acceptable levels, after which the secondary link is used. Whereas the drawing illustrates antennas 144, 146, in a typical dielectric lens or parabola configuration, it is understood that the antennas may be flat-panels or other antenna technologies. The antennas may also be integrated into the subscriber premises and /or pedestal equipment packaging. Also, the drawing illustrates antennas pointing in opposite directions, however it is to be understood that any orientation of the antennas is allowed. Further, the antennas may point at the same cell site and be used with combining equipment at the microwave, IF or digital level in order to combat multipath effects.

While particular embodiments and aspects of the present invention have been described in the foregoing, it is to be understood that other embodiments and aspects are possible within the scope of the invention and are intended to be included within the scope of the appended claims.

## Claims

1. A wireless distribution system for communicating over a coverage area, (WADS) said system comprising:
a plurality of cells (11) within the coverage area;
at least one cell site (12) including signal transmitting means within each cell;
at least one subscriber site (14) within each cell, including signal receiving means for receiving signals from the cell within the same cell;
characterised in that each subscriber site includes a modem (42) for demodulating the signals received from the cell site;
the cell site includes bandwidth signal means for transmitting bandwidth control signals to the subscriber site; and
the modem includes bandwidth selecting means responsive to the bandwidth control signals for selectively varying an operating bandwidth of the modem.

2. A system according to Claim 1, including a plurality of subscriber sites within at least one cell, the signal transmitting means in said at least once cell comprises means for broadcasting within the at least one cell a microwave signal having a selected bandwidth, and the modems comprise means responsive to respective bandwidth control signals operate on respective portions of said selected bandwidth.

3. A wireless distribution system according to Claim 1 or 2 wherein a plurality of subscriber sites within at least one cell comprise transmitter means for transmitting signals to the cell site and receiver means for receiving signals from the cell site, the transmitter means operating at different transmit and receive frequencies, and the modems comprise means responsive to the bandwidth control signals to provide a guard band between the transmit and receive frequencies.

4. A wireless distribution system according to Claim 1, 2 or 3 wherein: The cell site can include modulation signal means for transmitting modulation control signals to the subscriber site; and the modem includes modulation method selecting manes responsive to the modulation control signals for selectively varying the modulation method of the modem.

5. A wireless distribution system according to any one of claims 2 to 6 including monitoring means for monitoring system performance and control means for controllably varying the bandwidth control signals according to system performance.

6. A wireless distribution system according to Claims 4 or 5 including monitoring means for monitoring system performance and control means for controllably varying the bandwidth control signals according to system performance.

7. A wireless distribution system according to Claims 5 to 6 including monitoring means for monitoring system performance and control means for controllably varying forward error correction control signals according to system performance.

8. A wireless distribution system according to any one of Claims 1 to 7 comprising plural cell sites including trunking means for wireless communication amongst the cell sites with trunking signals on a selected frequency and at a selected polarization may be provided, the signal transmitting means comprising means for transmitting distribution signals within the respective cells on said selected frequency and cross polarized with respect to the trunking signals.

9. A system according to Claim 1 wherein;
the cell site can include means for communicating with an internet service provider;
at least one subscriber site includes a plurality of computers, a network linking the computers for communication with one another, a modem connected to the network, transmitter means for transmitting signals from the modem to the cell site and receiver means for receiving signals from the cell site;
each modem has a unique serial number assigned thereto;
each computer within the subscriber site has a class A IP address;
each modem comprises; means for converting a message received from a computer over the associated network to a wireless message format containing the serial number of the modem; and means for converting a message received in a wireless message format from the cell site to a network message format;
the cell site comprises means for converting a message received from a modem to an IP message format, replacing the class A IP address with an IP address; and
means for converting a message received from the internet service provider to a wireless message format containing a modem serial number and a class A IP address.

10. A method of operating a wireless distribution system (WADS) communicating over a coverage area including a plurality of cells (11) , said method comprising:
providing at least one cell site (12) including signal transmitting means within each cell;
transmitting signals from the cell sites throughout the respective cells;
providing within each cell at least one subscriber site (14) including signal receiving means;
receiving signals at each subscriber site from the cell site within the same cell;
characterised in that each subscriber site is provided with a modem (42);
wherein the signals received from the cell site are demodulated with the modem;
bandwidth control signals are transmitted from each cell site; and the operating bandwidth of the modem is varied according to the bandwidth control signals.

11. A method according to Claim 10 wherein the system which includes a plurality of subscriber sites within at least one cell, and the method includes broadcasting within the at least one cell a microwave signal having a selected bandwidth, and controlling the modems to operate on respective portions of said selected bandwidth.

12. A method according to Claim 10 or 11, the method further comprising:
transmitting signals from at least one subscriber site to the respective cell site at a first frequency;
receiving signals at said at least one subscriber site from the respective cell site at a second frequency; and
controlling the operation of the modems to provide a guard band between the first and second frequencies.

13. A method according to claims any one of 10 to 12 including:
transmitting modulation control signals to the subscriber site; and selectively varying the modulation method of the modem according to the modulation control signals.

14. A method according to any one of Claims 10 to 13 including monitoring system performance and controllably varying the bandwidth control signals according to system performance.

15. A method according to any one of Claims 13 & 14 including monitoring system performance and controllably varying the modulation control signals according to system performance.

16. A method according any one of Claims 14 & 15 including monitoring system performance and controllably varying forward error correction control signals according to system performance.

17. A method according to Claim 10 further comprising the steps of:
providing the cell site with means for communicating with an internet service provider;
providing at least one subscriber site with a plurality of computers, a network linking the computers for communication with one another, a modem
connected to the network transmitter means for transmitting signals from the modem to the cell site and receiver means for receiving signals from the cell site;
assigning a unique serial number to each modem;
providing a class A IP address for each computer within the subscriber site;
converting a message received from a computer over the associated network to a wireless message by the modem in a wireless message format from the cell site to a network message format;
converting a message received by the cell site from a modem to an IP message format, replacing the class A IP address with an IP address; and
converting a message received by the cell site from the internet service provider to a wireless message format containing a modem serial number and a class A IP address.

## Patentansprüche

1. Funkverteilungssystem für eine Kommunikation über ein Überdeckungsgebiet (WADS), wobei das System folgendes umfaßt:
eine Vielzahl von Zellen (11) innerhalb des Überdeckungsgebietes,
zumindest einen Zellenstandort (12), der Signalsendeeinrichtungen einschließt, innerhalb jeder Zelle,
zumindest ein Teilnehmer-Standort (14) innerhalb jeder Zelle, der Signalempfängereinrichtungen zum Empfang von Signalen von der Zelle innerhalb der gleichen Zelle einschließt,
dadurch gekennzeichnet, daß jeder Teilnehmer-Standort ein Modem (42) zur Demodulation der von dem Zellenstandort empfangenen Signale einschließt,
daß der Zellenstandort Bandbreitensignaleinrichtungen zur Übertragung von Bandbreiten-Steuersignalen an den Teilnehmerstandort einschließt, und
daß das Modem Bandbreiten-Auswahleinrichtungen einschließt, die auf die Bandbreiten-Steuersignale ansprechen, um selektiv eine Betriebsbandbreite des Modems zu ändern.

2. System nach Anspruch 1, das eine Vielzahl von Teilnehmerstandorten innerhalb der zumindest einen Zelle einschließt, wobei die Signalsendeeinrichtung in der zumindest einen Zelle Einrichtungen zum Rundsenden in der zumindest einen Zelle eines Mikrowellensignals mit einer ausgewählten Bandbreite aufweist, und wobei die Modems auf die jeweiligen Bandbreiten-Steuersignale ansprechende Einrichtungen zum Betrieb auf jeweiligen Teilen der ausgewählten Bandbreite aufweisen.

3. Funkverteilungssystem nach Anspruch 1 oder 2, bei dem eine Vielzahl von Teilnehmer-Standorten innerhalb zumindest einer Zelle Sendeeinrichtungen zur Aussendung von Signalen an den Zellenstandort und Empfängereinrichtungen zum Empfang von Signalen von dem Zellenstandort aufweist, wobei die Sendeeinrichtungen auf unterschiedlichen Sende- und Empfangsfrequenzen arbeiten und die Modems Einrichtungen aufweisen, die auf die Bandbreiten-Steuersignale ansprechen, um ein Schutzband zwischen den Sende- und Empfangsfrequenzen zu schaffen.

4. Funkverteilungssystem nach Anspruch 1, 2 oder 3, bei dem: der Zellenstandort Modulationssignaleinrichtungen zur Aussendung von Modulationssteuersignalen an den Teilnehmer-Standort einschließen kann und das Modem Modulationsverfahren-Auswahleinrichtungen einschließt, die auf die Modulationssteuersignale ansprechen, um selektiv das Modulationverfahren des Modems zu ändern.

5. Funkverteilungssystem nach einem der Ansprüche 2-6, das Überwachungseinrichtungen zur Überwachung des Systembetriebsverhaltens und Steuereinrichtungen zur steuerbaren Änderung der Bandbreiten-Steuersignale in Abhängigkeit von der Systembetriebsleistung einschließt.

6. Funkverteilungssystem nach den Ansprüchen 4 oder 5, das Überwachungseinrichtungen zur Überwachung der System-Betriebsleistung und Steuereinrichtungen zur steuerbaren Änderung der Bandbreiten-Steuersignale entsprechend der System--Betriebsleistung einschließt.

7. Funkverteilungssystem nach Anspruch 5-6, das Überwachungseinrichtungen zur Überwachung der System-Betriebsleistung und Steuereinrichtungen zur steuerbaren Änderung von Vorwärtsfehler-Korrektursteuersignalen entsprechend der System--Betriebsleistung einschließt.

8. Funkverteilungssystem nach einem der Ansprüche 1-7, das mehrere Zellenstandorte unter Einschluß von Bündelungseinrichtungen für eine Funkkommunikation zwischen den Zellenstandorten aufweist, wobei Bündelungssignale auf ausgewählten Frequenzen und mit ausgewählter Polarität vorgesehen sein können, wobei die Signalsendeeinrichtungen Einrichtungen zur Aussendung von Verteilungssignalen in den jeweiligen Zellen auf der ausgewählten Frequenz und mit einer Kreuzpolarisation bezüglich der Bündelungssignale aufweisen.

9. System nach Anspruch 1, bei dem:
der Zellenstandort Einrichtungen zur Kommunikation mit einem Internet--Dienstanbieter einschließen kann,
zumindest ein Teilnehmer-Standort eine Vielzahl von Computern, ein die Computer für eine Kommunikation miteinander verbindendes Netz, ein mit dem Netz verbundenes Modem, Sendeeinrichtungen zur Aussendung von Signalen von dem Modem an den Zellenstandort und Empfängereinrichtungen zum Empfang von Signalen von dem Zellenstandort einschließt,
jedem Modem eine eindeutige Seriennummer zugeordnet ist,
jeder Computer am Teilnehmer-Standort eine Klasse-A-IP-Adresse hat,
jedes Modem Einrichtungen zur Umwandlung einer von einem Computer über das zugehörige Netz empfangenen Nachricht in ein Funknachrichtenformat, das die Seriennummer des Modems enthält, und Einrichtungen zur Umwandlung einer in einem Funknachrichtenformat von dem Zellenstandort empfangenen Nachricht in ein Netz--Nachrichtenformat umfaßt,
der Zellenstandort Einrichtungen zur Umwandlung einer von einem Modem empfangenen Nachricht in ein IP-Nachrichtenformat umfaßt, wobei die Klasse-A-IP-Adresse durch eine IP-Adresse ersetzt wird, und Einrichtungen zur Umwandlung einer von dem Internet-Dienstanbieter empfangenen Nachricht in ein Funknachrichtenformat umfaßt, das eine Modem-Seriennummer und eine Klasse-A-IP-Adresse enthält.

10. Verfahren zum Betrieb eines Funkverteilungssystems (WADS), das eine Kommunikation über ein Überdeckungsgebiet ausführt, das eine Vielzahl von Zellen (11) einschließt, wobei das Verfahren folgendes umfaßt:
Schaffung zumindest eines Zellenstandortes (12), der Signalsendeeinrichtungen einschließt, innerhalb jeder Zelle,
Aussendung von Signalen von den Zellenstandorten über die gesamten jeweiligen Zellen,
Schaffung zumindest eines Teilnehmer-Standortes (14) in jeder Zelle, der Signalempfangseinrichtungen einschließt,
Empfangen von Signalen an jedem Teilnehmer-Standort von dem Zellenstandort innerhalb der gleichen Zelle,
dadurch gekennzeichnet, daß jeder Teilnehmer-Standort mit einem Modem (42) versehen ist,
wobei die von dem Zellenstandort empfangenen Signale mit dem Modem demoduliert werden,
und daß Bandbreiten-Steuersignale von jedem Zellenstandort aus ausgesandt werden und die Betriebsbandbreite des Modems entsprechend den Bandbreiten--Steuersignalen geändert wird.

11. Verfahren nach Anspruch 10, bei dem das System eine Vielzahl von Teilnehmer-Standorten innerhalb zumindest einer Zelle einschließt, und bei dem das Verfahren das Rundsenden von zumindest einem Mikrowellensignal in der zumindest einen Zelle mit einer ausgewählten Bandbreite und die Steuerung der Modems derart einschließt, daß diese auf jeweiligen Teilen der ausgewählten Bandbreite arbeiten.

12. Verfahren nach Anspruch 10 oder 11, wobei das Verfahren weiterhin:
die Aussendung von Signalen von zumindest einem Teilnehmerstandort an dem jeweiligen Zellenstandort mit einer ersten Frequenz,
den Empfang von Signalen an dem zumindest einen Teilnehmer-Standort von dem jeweiligen Zellenstandort auf einer zweiten Frequenz, und
die Steuerung des Betriebs der Modems derart umfaßt, daß ein Schutzband zwischen den ersten und zweiten Frequenzen geschaffen wird.

13. Verfahren nach einem der Ansprüche 10-12, das folgendes einschließt:
Aussenden von Modulations-Steuersignalen an den Teilnehmer-Standort, und selektives Ändern des Modulationsverfahrens des Modems entsprechend der Modulations-Steuersignale.

14. Verfahren nach einem der Ansprüche 10-13, das die Überwachung der System-betriebsleistung und die steuerbare Änderung der Bandbreiten-Steuersignale entsprechend der Systembetriebsleistung einschließt.

15. Verfahren nach einem der Ansprüche 13 und 14, das die Überwachung der Systembetriebsleistung und die steuerbare Änderung der Modulations-Steuersignale entsprechend der Systembetriebsleistung einschließt.

16. Verfahren nach einem der Ansprüche 14 und 15, das die Überwachung der Systembetriebsleistung und die steuerbare Änderung von Vorwärts-Fehlerkorrektur-Steuersignalen entsprechend der Systembetriebsleistung einschließt.

17. Verfahren nach Anspruch 10, das weiterhin die folgenden Schritte umfaßt:
Schaffung von Einrichtungen zur Kommunikation mit einem Internet--Dienstanbieter an dem Zellenstandort,
Vorsehen einer Vielzahl von Computern, eines die Computer für eine Kommunikation miteinander verbindenen Netzes, eines Modems, das mit den Netz--Sendeeinrichtungen zur Aussendung von Signalen von dem Modem zu dem Zellenstandort und Empfängereinrichtungen zum Empfang von Signalen von dem Zellenstandort verbunden ist, an zumindest einem Teilnehmer-Standort,
Zuordnung einer eindeutigen Seriennummer zu jedem Modem,
Bereitstellung einer Klasse-A-IP-Adresse für jeden Computer an dem Teilnehmer-Standort,
Umwandlung einer von einem Computer über das zugehörige Netz von dem Modem empfangenen Nachricht in eine Funknachricht in einem Funknachrichtenformat von dem Zellenstandort in ein Netz-Nachrichtenformat,
Umwandlung einer von dem Zellenstandort von einem Modem empfangenen Nachricht in ein IP-Nachrichtenformat, Ersetzen der Klasse-A-IP-Adresse durch eine IP-Adresse, und
Umwandlung einer an den Zellenstandort von dem Internet-Dienstanbieter empfangenen Nachricht in ein Funknachrichtenformat, das eine Modem-Seriennummer und eine Klasse-A-IP-Adresse enthält.

## Revendications

1. Système de distribution sans fil (WADS) pour assurer une communication sur une zone de couverture, ledit système comportant :
une pluralité de cellules (11) dans la zone de couverture,
au moins un site cellulaire (12) comportant des moyens d'émission de signaux dans chaque cellule,
au moins un site d'abonné (14) dans chaque cellule, comportant des moyens de réception de signaux pour recevoir des signaux depuis la cellule dans la même cellule,
caractérisé en ce que chaque site d'abonné comporte un modem (42) pour démoduler les signaux reçus depuis le site cellulaire,
le site cellulaire comporte des moyens de signaux de commande de largeur de bande pour émettre des signaux de commande de largeur de bande vers le site d'abonné, et
le modem comporte des moyens de sélection de largeur de bande sensibles aux signaux de commande de largeur de bande pour faire varier de manière sélective une largeur de bande de fonctionnement du modem.

2. Système selon la revendication 1, comportant une pluralité de sites d'abonné dans au moins une cellule, les moyens d'émission de signaux dans ladite au moins une cellule comportent des moyens pour diffuser, dans la au moins une cellule, un signal hyperfréquence ayant une largeur de bande sélectionnée, et les modems comportent des moyens sensibles aux signaux de commande de largeur de bande respectifs qui fonctionnent sur de parties respectives de ladite largeur de bande sélectionnée.

3. Système de distribution sans fil selon la revendication 1 ou 2, dans lequel une pluralité de sites d'abonné dans au moins une cellule comportent des moyens émetteurs pour émettre des signaux vers le site cellulaire et des moyens récepteurs pour recevoir des signaux provenant du site cellulaire, les moyens émetteurs fonctionnant à des fréquences d'émission et de réception différentes, et les modems comportent des moyens sensibles aux signaux de commande de largeur de bande pour fournir une bande de garde entre les fréquences d'émission et de réception.

4. Système de distribution sans fil selon la revendication 1, 2 ou 3, dans lequel : le site cellulaire peut comporter des moyens de signaux de modulation pour émettre des signaux de commande de modulation vers le site d'abonné, et le modem comporte des moyens de sélection de procédé de modulation sensibles aux signaux de commande de modulation pour faire varier de manière sélective le procédé de modulation du modem.

5. Système de distribution sans fil selon l'une quelconque des revendications 2 à 4, comportant des moyens de surveillance pour surveiller la performance du système et des moyens de commande pour faire varier de manière contrôlable les signaux de commande de largeur de bande conformément à la performance du système.

6. Système de distribution sans fil selon la revendication 4 ou 5, comportant des moyens de surveillance pour surveiller la performance du système et des moyens de commande pour faire varier de manière contrôlable les signaux de commande de largeur de bande conformément à la performance du système.

7. Système de distribution sans fil selon les revendications 5 et 6, comportant des moyens de surveillance pour surveiller la performance du système et des moyens de commande pour faire varier de manière contrôlable des signaux de commande de correction d'erreurs sans voie de retour conformément à la performance du système.

8. Système de distribution sans fil selon l'une quelconque des revendications 1 à 7, comportant plusieurs sites cellulaires incluant des moyens de jonction pour établir une communication sans fil parmi les sites cellulaires, des signaux de jonction sur une fréquence sélectionnée et à une polarisation sélectionnée pouvant être fournis, les moyens d'émission de signaux comportant des moyens pour émettre des signaux de distribution dans les cellules respectives sur ladite fréquence sélectionnée, et étant polarisés de manière croisée par rapport aux signaux de jonction.

9. Système selon la revendication 1, dans lequel :
le site cellulaire peut comporter des moyens pour communiquer avec un fournisseur de service Internet,
au moins un site d'abonné comporte une pluralité d'ordinateurs, un réseau reliant les ordinateurs pour établir une communication entre ceux-ci, un modem relié au réseau, des moyens émetteurs pour émettre des signaux depuis le modem vers le site cellulaire et des moyens récepteurs pour recevoir des signaux provenant du site cellulaire,
chaque modem a un numéro de série unique qui lui est affecté,
chaque ordinateur du site d'abonné a une adresse IP de classe A,
chaque modem comporte :
des moyens pour convertir un message reçu depuis un ordinateur sur le réseau associé en un format de message sans fil contenant le numéro de série du modem, et des moyens pour convertir un message reçu dans un format de message sans fil provenant du site cellulaire en un format de message de réseau,
le site cellulaire comporte des moyens pour convertir un message reçu depuis un modem en un format de message IP, en remplaçant l'adresse IP de classe A par une adresse IP, et
des moyens pour convertir un message reçu depuis le fournisseur de service Internet en un format de message sans fil contenant un numéro de série de modem et une adresse IP de classe A.

10. Procédé de mise en oeuvre d'un système de distribution sans fil (WADS) communiquant sur une zone de couverture comportant une pluralité de cellules (11), ledit procédé comportant les étapes consistant à :
agencer au moins un site cellulaire (12) comportant des moyens d'émission de signaux dans chaque cellule,
émettre des signaux depuis les sites cellulaires à travers les cellules respectives,
agencer dans chaque cellule au moins un site d'abonné (14) comportant des moyens de réception de signaux,
recevoir des signaux au niveau de chaque site d'abonné provenant du site cellulaire de la même cellule,
caractérisé en ce que chaque site d'abonné est muni d'un modem (42),
dans lequel les signaux reçus depuis le site cellulaire sont démodulés par le modem, et
des signaux de commande de largeur de bande sont émis depuis chaque site cellulaire, et la largeur de bande de fonctionnement du modem est modifiée conformément aux signaux de commande de largeur de bande.

11. Procédé selon la revendication 10, dans lequel le système comporte une pluralité de sites d'abonné au sein d'au une cellule, et le procédé inclut la diffusion, dans la au moins une cellule, d'un signal hyperfréquence ayant une largeur de bande sélectionnée, et la commande des modems pour qu'ils fonctionnent sur des parties respectives de ladite largeur de bande sélectionnée.

12. Procédé selon la revendication 10 ou 11, le procédé comportant de plus les étapes consistant à :
émettre des signaux depuis au moins un site d'abonné vers le site cellulaire respectif à une première fréquence,
recevoir des signaux au niveau dudit au moins un site d'abonné depuis le site cellulaire respectif à une seconde fréquence, et
commander l'opération des modems pour fournir une bande de garde entre les première et seconde fréquences.

13. Procédé selon l'une quelconque des revendications 10 à 12, comportant les étapes consistant à :
émettre des signaux de commande de modulation vers le site d'abonné, et faire varier de manière sélective le procédé de modulation du modem conformément aux signaux de commande de modulation.

14. Procédé selon l'une quelconque des revendications 10 à 13, comportant la surveillance de la performance du système et la variation contrôlable des signaux de commande de modulation conformément à la performance du système.

15. Procédé selon l'une quelconque des revendications 13 et 14, incluant la surveillance de la performance du système et la variation contrôlable des signaux de commande de modulation conformément à la performance du système.

16. Procédé selon l'une quelconque des revendications 14 et 15, incluant la surveillance de la performance du système et la variation contrôlable de signaux de commande de correction d'erreurs sans voie de retour conformément à la performance du système.

17. Procédé selon la revendication 10, comportant de plus les étapes consistant à :
agencer dans le site cellulaire des moyens pour communiquer avec un fournisseur de service Internet,
agencer dans au moins un site d'abonné une pluralité d'ordinateurs, un réseau reliant les ordinateurs pour établir une communication entre ceux-ci, un modem relié aux moyens émetteurs de réseau pour émettre des signaux depuis le modem vers le site cellulaire et des moyens récepteurs pour recevoir des signaux depuis le site cellulaire,
affecter un numéro de série unique à chaque modem,
fournir une adresse IP de classe A pour chaque ordinateur dans le site d'abonné,
convertir un message reçu depuis un ordinateur sur le réseau associé en un message sans fil par le modem dans un format de message sans fil provenant du site cellulaire en un format de message de réseau,
convertir un message reçu par le site cellulaire depuis un modem en un format de message IP, en remplaçant l'adresse IP de classe A par une adresse IP, et
convertir un message reçu par le site cellulaire depuis le fournisseur de service Internet en un format de message sans fil contenant un numéro de série de modem et une adresse IP de classe A.
